(19) Europäisches Patentamt
European Patent Office
Office européen des brevets

(11) **EP 2 965 418 B1**

(12) # EUROPÄISCHE PATENTSCHRIFT

(45) Veröffentlichungstag und Bekanntmachung des Hinweises auf die Patenterteilung:
**18.12.2019 Patentblatt 2019/51**

(21) Anmeldenummer: **14709579.8**

(22) Anmeldetag: **27.02.2014**

(51) Int Cl.:
*H02P 1/46* (2006.01)   *H02P 6/22* (2006.01)
*H02P 25/18* (2006.01)   *H02K 1/14* (2006.01)

(86) Internationale Anmeldenummer:
**PCT/EP2014/053817**

(87) Internationale Veröffentlichungsnummer:
**WO 2014/135434 (12.09.2014 Gazette 2014/37)**

(54) **EINPHASIGER ELEKTROMOTOR**

SINGLE-PHASE ELECTRIC MOTOR

MOTEUR ÉLECTRIQUE MONOPHASÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.03.2013 DE 102013102124**

(43) Veröffentlichungstag der Anmeldung:
**13.01.2016 Patentblatt 2016/02**

(73) Patentinhaber: **ebm-papst St. Georgen GmbH & Co. KG**
**78112 St. Georgen (DE)**

(72) Erfinder:
• **KARWATH, Arno**
**78652 Deisslingen (DE)**
• **WINTER, Bjoern**
**79874 Breitnau (DE)**

(74) Vertreter: **Staeger & Sperling**
**Partnerschaftsgesellschaft mbB**
**Sonnenstraße 19**
**80331 München (DE)**

(56) Entgegenhaltungen:
**EP-A2- 1 094 595    WO-A1-03/084046**
**DE-A1- 3 010 318    DE-B3-102005 035 451**
**US-A- 4 678 972**

**Beschreibung**

Die Erfindung betrifft einen einphasigen Elektromotor.

Bei dreiphasigen Motoren mit einem Stator und einem Rotor ist das Verhältnis zwischen Statorpolen und Rotorpolen immer ungleich. So hat beispielsweise ein dreiphasiger Motor mit sechs Statorpolen, die in einem Abstand von 60° voneinander angeordnet sind, vier Rotorpole, die in einem Abstand von 90° voneinander angeordnet sind. Dabei sind jeder der drei Phasen zwei einander gegenüber liegende Statorpole zugeordnet. Hierdurch ist es bei jeder Rotorstellung möglich, über mindestens zwei der drei Phasen ein Drehmoment zu erzeugen, da jeder der drei Phasen eine magnetisch voneinander unterschiedliche Position der Rotorpole gegenüber steht. Somit ist bei jeder Rotorstellung ein Start des Motors mit großem Drehmoment möglich.

Bei einphasigen Motoren entspricht die Anzahl der Rotorpole der Anzahl der Statorpole. Dies hat zur Folge, dass immer dann, wenn jeder Rotorpol genau einem Statorpol gegenüber steht, kein Drehmoment durch eine Bestromung der Wicklungsanordnung erzeugt werden kann. Zudem nimmt der Rotor beispielsweise bei Lüftern im Stillstand bevorzugt genau diese Stellung ein, da sie dem Zustand geringster Energie entspricht.

Um trotzdem einen Start eines solchen Motors zu ermöglichen, sind bereits mehrere Verfahren bekannt.

Die DE 8 702 271 U1 zeigt einen Elektromotor, bei dem weichmagnetische Eisenplättchen so am Rotor angebracht sind, dass dieser im unbestromten Zustand eine Stellung einnimmt, aus der ein Start möglich ist. Dies wird auch als Erzeugung eines Reluktanz-Hilfsmoments bezeichnet.

Die DE 3 149 766 A1 zeigt einen Elektromotor, bei dem die Statorpole asymmetrisch ausgebildet sind, so dass der Abstand zwischen den Statorpolen und dem Rotor in Umfangsrichtung gesehen abnimmt. Dabei nehmen die Rotorpole des Rotormagneten bevorzugt eine Position ein, bei der sie im Mittel möglichst nah am Statorpol sind. Dies führt im unbestromten Zustand ebenfalls zu einer Startposition, aus der ein Anlauf des Motors möglich ist. Derartige Motoren werden millionenfach in CD-Spielern und Festplatten verwendet.

Die genannten Lösungen setzen einen Motor voraus, bei dem kein größeres externes Drehmoment und keine allzu große Reibung auftreten, wie dies z.B. bei Lüftern der Fall ist. Ansonsten ist nicht gewährleistet, dass die Startposition sicher eingenommen werden kann. Damit ist der Anwendungsbereich für diese Lösungen eingeschränkt.

Die EP 1 094 595 A2 offenbart und beschäftigt sich mit einer Regelungsvorrichtung für einen Permanentmagnet-Synchronmotor.

Die DE 10 2005 035 451 B3 zeigt einen elektronisch kommutierten Elektromotor mit einem permanentmagnetischen Rotor und einem bewickelten Stator mit einem einzigen Wicklungsstrang und einer elektronischen Steuerschaltung, die den Wicklungsstrang im bipolaren Betrieb mit einem Erregerstrom speist. Der Wicklungsstrang ist in zwei Wicklungsteile aufgeteilt und zwischen den zwei Wicklungsteilen ist eine Anzapfung vorgesehen, welche über einen Schalter mit einem definierten Potential der Steuerschaltung derart verbunden ist, dass die beiden Wicklungsteile getrennt voneinander ansteuerbar sind, damit zum Motoranlauf in eine vorgegebene Drehrichtung ein Statorfeld mit veränderbarer Ausrichtung erzeugbar ist, wobei die beiden Wicklungsteile mit Erregerströmen entweder in die gleiche Stromrichtung oder in entgegengesetzte Stromrichtung versorgt werden. Der Rotor und/oder der Stator sind mit asymmetrischen Polen aufgrund unterschiedlicher Polbreiten benachbarter Pole ausgebildet, so dass die beiden Wicklungsteile bei unterschiedlichen Rotorpositionen ihr maximales Drehmoment erzeugen.

Es ist eine Aufgabe der Erfindung, einen neuen einphasigen Elektromotor bereit zu stellen.

Die Aufgabe wird gelöst durch einen Elektromotor nach dem Anspruch 1, welcher u.a. aufweist: Einen Stator mit einer Anzahl S von Statorpolen, einen Rotor mit einem Rotormagneten, welcher Rotormagnet eine Anzahl R von Rotorpolen aufweist, wobei R gleich S ist, und wobei der Rotor oder der Stator oder beide eine Asymmetrie aufweisen, eine einphasige Wicklungsanordnung mit einem ersten Wicklungsanschluss und einem zweiten Wicklungsanschluss, wobei über den ersten Wicklungsanschluss und den zweiten Wicklungsanschluss eine Anzahl W von Spulen der Wicklungsanordnung bestrombar sind, eine Endstufe, welche dazu ausgebildet ist, einen Strom zwischen dem ersten Wicklungsanschluss und dem zweiten Wicklungsanschluss zu ermöglichen, eine erste Vorrichtung, welche dazu ausgebildet ist, in Zusammenwirken mit der Endstufe eine Bestromung mindestens einer Teilgruppe der W Spulen zu ermöglichen, wobei die mindestens eine Teilgruppe mehr als Null der W Spulen und weniger als W der W Spulen umfasst.

Bevorzugt ist die Asymmetrie dazu ausgebildet, bei jeder Rotorstellung des Rotors über zumindest einen der folgenden Bestromungsvorgänge

-   Bestromung aller W Spulen, oder
-   Bestromung der mindestens einen Teilgruppe der Spulen

die Erzeugung eines Drehmoments zu ermöglichen.

Bevorzugt sind mindestens zwei Teilgruppen vorgesehen.

Bevorzugt weist die erste Vorrichtung einen dritten Wicklungsanschluss und einen Schalter auf, um einen Strom zwischen dem ersten Wicklungsanschluss oder dem zweiten Wicklungsanschluss einerseits und dem dritten Wicklungsanschluss andererseits zu ermöglichen.

Erfindungsgemäß ist die Anzahl der Spulen zwischen dem ersten Wicklungsanschluss und dem dritten Wicklungsanschluss ungleich der Anzahl der Spulen zwischen dem dritten Wicklungsanschluss und dem zweiten Wicklungsanschluss.

Bevorzugt weist die Wicklungsanordnung eine Mehrzahl von zueinander parallelen Teilsträngen auf, und die erste Vorrichtung weist einen Schalter auf, der dazu ausgebildet ist, im nicht-leitenden Zustand einen Strom durch einen ersten Teil der Teilstränge zu verhindern, jedoch einen Strom durch die übrigen Teilstränge nicht zu verhindern.

Bevorzugt weist der Rotor eine Asymmetrie auf, welche dadurch erzeugt ist, dass die R Rotorpole zumindest teilweise eine von einander unterschiedliche Winkelerstreckung aufweisen.

Bevorzugt weist der Rotor eine Asymmetrie auf, welche dadurch erzeugt ist, dass der Winkelabstand der magnetischen Mitte eines Rotorpols zur magnetischen Mitte eines benachbarten Rotorpols zumindest teilweise ungleich 360°/R ist.

Bevorzugt weist der Rotor eine Asymmetrie auf, welche durch eine asymmetrische Magnetisierung des Rotormagneten erzeugt ist.

Bevorzugt weist der Rotor eine Asymmetrie auf, welche durch eine asymmetrische Anordnung unterschiedlicher Werkstoffe im Bereich des Rotors erzielt wird, wobei die unterschiedlichen Werkstoffe unterschiedliche magnetische Eigenschaften haben. Bevorzugt weist der Stator eine Asymmetrie auf, welche dadurch erzeugt ist, dass der Winkelabstand der benachbarten Statorpole zumindest teilweise ungleich 360°/S ist, wobei bevorzugt S = 2 ist.

Bevorzugt umfasst die mindestens eine Teilgruppe mindestens eine der W Spulen und höchstens W-1 Spulen.

Bevorzugt ist W = S.

Bevorzugt weist die Endstufe eine Vollbrückenschaltung auf, um eine Bestromung der Wicklungsanordnung zwischen dem ersten Wicklungsanschluss und dem zweiten Wicklungsanschluss in beide Richtung zu ermöglichen.

Bevorzugt weist der Rotormagnet permanentmagnetische Rotorpole oder elektromagnetisch erzeugte Rotorpole auf, wobei im Falle der elektromagnetisch erzeugten Rotorpole jedem Rotorpol eine im Betrieb bestromte Wicklung zugeordnet ist.

Die Aufgabe wird gelöst durch ein Verfahren nach dem Anspruch 11 zum Bestromen eines Elektromotor mit einem Stator mit S Statorpolen, einem Rotor mit R Rotorpolen, wobei R gleich S ist, einer einphasige Wicklungsanordnung mit einem ersten Wicklungsanschluss und einem zweiten Wicklungsanschluss, wobei zwischen dem ersten Wicklungsanschluss und dem zweiten Wicklungsanschluss W Spulen elektrisch verbunden sind, einer Endstufe, welche dazu ausgebildet ist, einen Strom zwischen dem ersten Wicklungsanschluss und dem zweiten Wicklungsanschluss zu ermöglichen, einer erste Vorrichtung, welche dazu ausgebildet ist, in Zusammenwirken mit der Endstufe eine Bestromung mindestens einer Teilgruppe der W Spulen zu ermöglichen, wobei die mindestens eine Teilgruppe mehr als Null der W Spulen und weniger als W der W Spulen umfasst, welches Verfahren folgende Schritte aufweist:

A) Die Endstufe wird in einem ersten Zustand des Elektromotors derart angesteuert, dass alle W Spulen über den ersten Wicklungsanschluss und den zweiten Wicklungsanschluss bestromt werden;
B) Die Endstufe wird in einem zweiten Zustand des Elektromotors derart angesteuert, dass nur die mindestens eine Teilgruppe der W Spulen bestromt wird.

Erfindungsgemäß wird die Drehzahl des Elektromotors erfasst, und es wird vom ersten Zustand des Elektromotors in den zweiten Zustand gewechselt, wenn die Drehzahl des Elektromotors unter einer vorgegebenen Mindestdrehzahl liegt.

Erfindungsgemäß wird beim Start des Motors in den zweiten Zustand gewechselt, und anschließend in den ersten Zustand gewechselt.

Bevorzugt wird im ersten Zustand die Richtung der Bestromung zwischen dem ersten Wicklungsanschluss und dem zweiten Wicklungsanschluss in Abhängigkeit von der Rotorstellung des Rotors vorgegeben.

Weitere Einzelheiten und vorteilhafte Weiterbildungen der Erfindung ergeben sich aus den im folgenden beschriebenen und in den Zeichnungen dargestellten, in keiner Weise als Einschränkung der Erfindung zu verstehenden Ausführungsbeispielen, sowie aus den Unteransprüchen. Es zeigt:

Fig. 1     eine schematische Darstellung eines einphasigen Elektromotors 10 mit sechs Statorpolen,
Fig. 2     ein Schaltbild für eine Schaltung zum Betreiben des Motors 10 von Fig. 1,
Fig. 3     eine Messung der induzierten Spannung des Motors 10 aus Fig. 1,
Fig. 4     eine Detailansicht von Fig. 3,
Fig. 5     eine Endstufe für den Motor 10 von Fig. 1 mit zwei Spulen,
Fig. 6     eine Endstufe für den Motor 10 von Fig. 1 mit zwei Spulen,
Fig. 7     eine Endstufe für den Motor 10 von Fig. 1 mit zwei Spulen,
Fig. 8     eine Endstufe für den Motor 10 von Fig. 1 mit zwei Strängen,

Fig. 9     eine Endstufe für den Motor 10 von Fig. 1 mit vier Spulen, die in Reihe geschaltet sind,

Fig. 10     eine Endstufe für den Motor 10 von Fig. 1 mit vier Spulen, die in Reihe geschaltet sind,

Fig. 11     eine Endstufe für den Motor 10 von Fig. 1 mit vier Spulen, die in zwei Zweigen parallel geschaltet sind,

Fig. 12     eine Endstufe für den Motor 10 von Fig. 1 mit vier Spulen, die in zwei Zweigen parallel geschaltet sind,

Fig. 13     einen vierpoligen Rotor des Motors 10 von Fig. 1, bei dem die Rotorpole zwei unterschiedliche Winkelerstreckungen haben,

Fig. 14     einen vierpoligen Rotor des Motors 10 von Fig. 1, bei dem die Rotorpole drei unterschiedliche Winkelerstreckungen haben,

Fig. 15     einen vierpoligen Rotor 40, bei dem zwischen den Rotorpolen neutrale Bereiche mit unterschiedlichen Winkelerstreckungen vorgesehen sind,

Fig. 16     einen Rotor 40 für den Motor 10 von Fig. 1 mit geschrägten Rotorpolen,

Fig. 17     einen asymmetrischen sechspoligen Stator für den Motor 10 von Fig. 1,

Fig. 18     einen asymmetrischen zweipoligen Stator für den Motor 10 von Fig. 1,

Fig. 19     Vergleichsmessungen der Spannungskonstante kE,

Fig. 20     Vergleichsmessungen des Rastmoments,

Fig. 21     Vergleichsmessungen der Spannungskonstante kE,

Fig. 22     Vergleichsmessungen des Rastmoments,

Fig. 23     eine Messung des Stroms durch die Endstufe des Motors 10 von Fig. 1 ohne Korrektur des Rotorstellungssignals,

Fig. 24     eine Messung des Stroms durch die Endstufe des Motors 10 von Fig. 1 mit einem verbesserten Rotorstellungssignal,

Fig. 25     eine Variante zur Bewicklung eines sechspoligen Stators des Motors 10 von Fig. 1,

Fig. 26     eine Endstufe für den Motor 10 von Fig. 1 mit einem Wicklungsanschluss im Bereich einer Spule,

Fig. 27     ein Flussdiagramm für ein Startverfahren für den Motor 10 von Fig. 1, und

Fig. 28     einen elektromagnetisch erzeugten Rotormagneten.

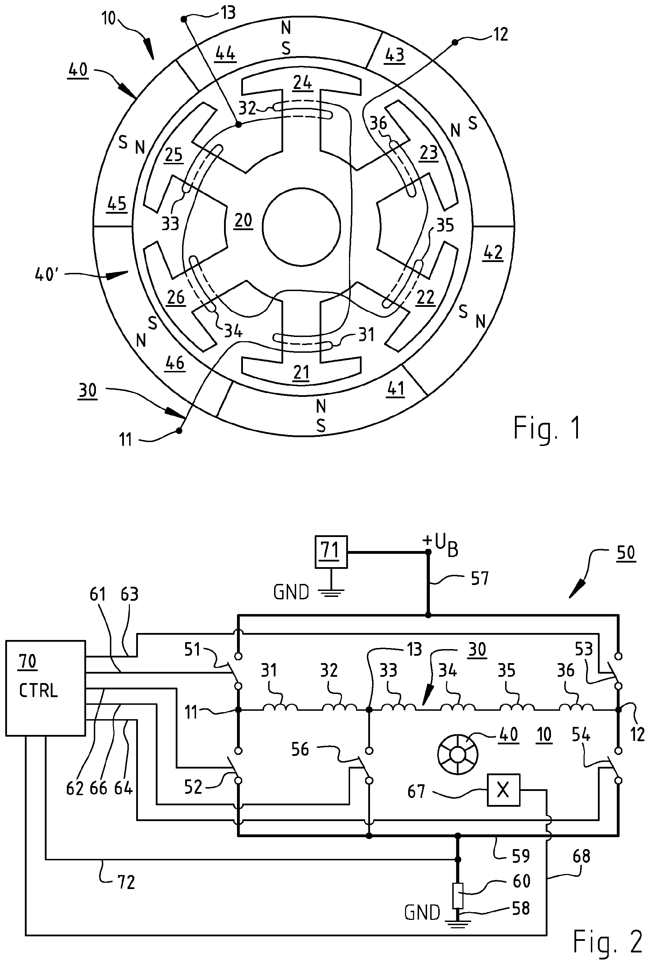

Fig. 1 zeigt einen Elektromotor 10 mit einem Stator 20 und einem Rotor 40. Dem Stator 20 ist eine Wicklungsanordnung 30 zugeordnet, und er hat sechs Statorpole 21 bis 26. Der Rotor 40 hat einen Rotormagneten 40' mit ebenfalls sechs Rotorpolen 41 bis 46, die bevorzugt als permanentmagnetische Rotorpole 41 bis 46 ausgebildet sind.

Die Wicklungsanordnung 30 hat sechs in Reihe geschaltete Spulen 31 bis 36, die zwischen einem ersten Wicklungsanschluss 11 und einem zweiten Wicklungsanschluss 12 in Reihe geschaltet bzw. elektrisch verbunden sind. Den Statorpolen 21 bis 26 ist jeweils eine der Spulen 31 bis 36 zugeordnet, wobei die Spulen 31 bis 36 derart gewickelt sind, dass bei einer Bestromung jeweils abwechselnd bei den benachbarten Statorpolen 21 bis 26 ein Nordpol dann ein Südpol, dann wieder ein Nordpol etc. folgt, da auch die Rotorpole 41 bis 46 jeweils die Richtung abwechselnd ändern. Die Wicklungsanordnung 30 beginnt - ausgehend vom ersten Wicklungsanschluss 11 - beim Statorpol 21, verläuft von diesem weiter zum Statorpol 24 und anschließend zu den Statorpolen 25, 26, 22 und 23, und von dort zum zweiten Wicklungsanschluss 12. Über den ersten Wicklungsanschluss 11 und den zweiten Wicklungsanschluss 12 sind somit die Spulen 31 bis 36 bestrombar.

An der Wicklungsanordnung 30 ist zwischen den Statorpolen 24 und 25 ein dritter Wicklungsanschluss 13 vorgesehen, der auch als Anzapfung bezeichnet werden kann.

Fig. 2 zeigt ein entsprechendes Schaltbild für den Motor 10 aus Fig. 1. Dargestellt ist die Wicklungsanordnung 30 mit den sechs Spulen 31 bis 36 und dem ersten Wicklungsanschluss 11, dem zweiten Wicklungsanschluss 12 und dem dritten Wicklungsanschluss 13 sowie eine Steuervorrichtung 70 und eine Endstufe 50 zur Beeinflussung des Stroms durch die Wicklungsanordnung 30.

Eine erste Leitung 57 (+$U_B$) und eine zweite Leitung 58 (GND bzw. Bezugspotential) sind vorgesehen, um der Endstufe 50 eine Versorgungsspannung +$U_B$ zuzuführen, beispielsweise von einer Gleichspannungsquelle 71.

Ein Schalter 51 ist zwischen der ersten Leitung 57 und dem ersten Wicklungsanschluss 11 vorgesehen, und ein Schalter 52 zwischen dem ersten Wicklungsanschluss 11 und der zweiten Leitung 58.

Ein Schalter 53 ist zwischen der ersten Leitung 57 und dem zweiten Wicklungsanschluss 12 vorgesehen, und ein Schalter 54 zwischen dem zweiten Wicklungsanschluss 12 und der zweiten Leitung 58.

Die Anordnung mit den vier Schaltern 51, 52, 53 und 54 wird auch als Vollbrückenschaltung oder H-Brücke (englisch: full bridge circuit, H bridge) bezeichnet. Hierbei bildet die Wicklungsanordnung 30 den Brückenzweig der Vollbrückenschaltung. Ein Schalter 56 ist zwischen dem dritten Wicklungsanschluss 13 und der zweiten Leitung 58 vorgesehen.

Die Leitung 58 ist über einen so genannten Fußpunktwiderstand 60 mit einer Leitung 59 verbunden, und dementsprechend sind die Schalter 52, 54, 56 über die Leitung 59 indirekt mit der Leitung 58 verbunden. Der Widerstand 60 ist üblicherweise niederohmig, und er kann zusätzlich oder alternativ in der Leitung 57 vorgesehen sein, oder aber komplett entfallen.

Eine Steuervorrichtung 70 hat fünf Steuerleitungen 61, 62, 63, 64 und 66, über die sie mit den fünf Schaltern 51 bis 54 und 56 verbunden ist, um diese leitend oder nicht-leitend zu schalten.

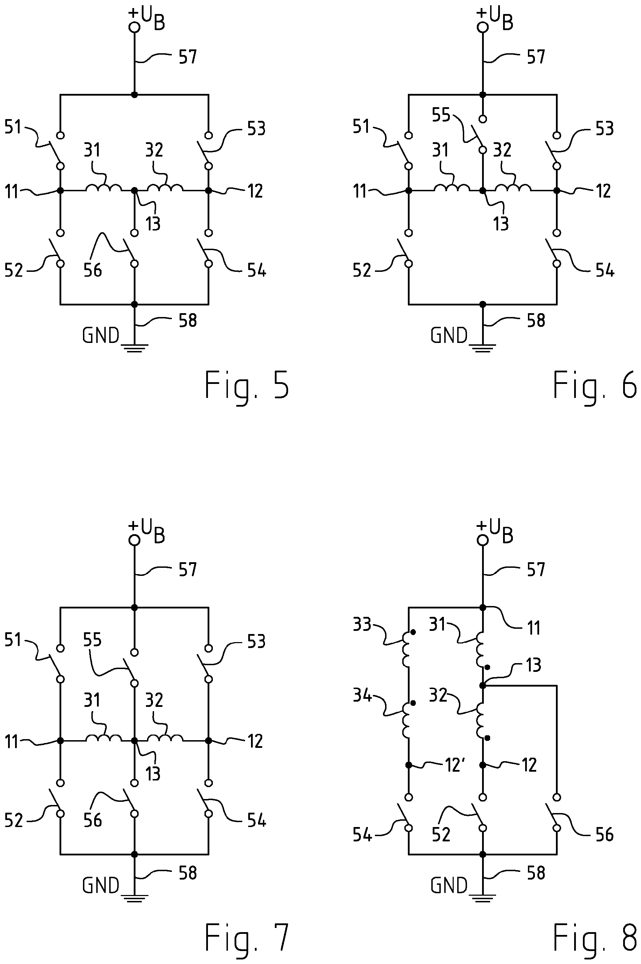

Als Schalter 51, 52, 53, 54, 56 und 55 (vgl. Fig. 6 und Fig. 7) werden bevorzugt steuerbare Schalter, weiter bevorzugt Halbleiterschalter wie MOSFETs, IGBTs (Isolated Gate Bipolar Transistor), bipolare Transistoren verwendet, soweit nichts anderes ausgeführt ist. Für die Schalter 55, 56 können z.B. auch Relais verwendet werden.

Die oberen Schalter 51, 53, 55 werden auch als High Side-Schalter (englisch: high side switch) bezeichnet, und die unteren Schalter 52, 54, 56 als Low Side-Schalter (englisch: low side switch).

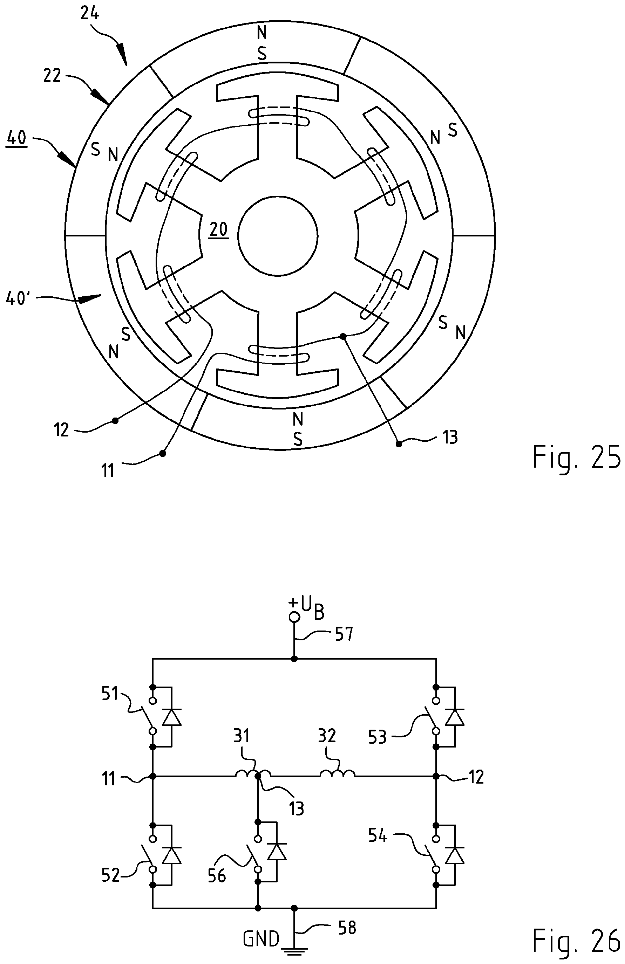

Den Schaltern 51 bis 56 ist bevorzugt jeweils eine Freilaufdiode zugeordnet (vgl. Fig. 26), um einen Strom durch die Schalter in umgekehrter Richtung zu verhindern, wie er z.B. bei nicht-leitend geschalteten Schaltern 51 bis 56 und sich drehendem Rotor 40 durch die induzierte Spannung auftreten kann. Dabei kann alternativ auch nur bei den Schaltern 51, 52, 53, 54 eine Freilaufdiode vorgesehen sein, und der Schalter 56 kann ohne eine Freilaufdiode sein, da die Bestromung über den Schalter 56 auf den Startvorgang beschränkt werden kann, so dass noch keine große induzierte Spannung auftritt.

Am Rotor 40 ist bevorzugt ein Rotorstellungssensor 67 (z. B. Hall-Sensor oder MR (magneto resistive)-Sensor oder Encoder) zur Bestimmung der Rotorlage angeordnet, und der Rotorstellungssensor 67 ist über eine Leitung 68 mit der Steuervorrichtung 70 verbunden.

Die Steuervorrichtung 70 ist über eine Leitung 72 mit der Leitung 59 verbunden, um das Potential am Fußpunktwiderstand 60 zu messen.

## Funktionsweise

Im normalen Betrieb, wenn der Rotor 40 sich also dreht und bevorzugt eine Mindestdrehzahl erreicht hat, erfolgt die Bestromung der Wicklungsanordnung 30 über die Vollbrückenschaltung 51, 52, 53, 54.

Hierzu werden beispielsweise abwechselnd entweder in einem ersten Zustand Z1 die Schalter 51 und 54 leitend geschaltet, oder in einem zweiten Zustand Z2 die Schalter 53 und 52 leitend geschaltet.

Im ersten Zustand Z1 fließt ein Strom von der ersten Leitung 57 über den Schalter 51, den Wicklungsanschluss 11, die Wicklungsanordnung 30, den zweiten Wicklungsanschluss 12, den Schalter 54, die Leitung 59 und den Fußpunktwiderstand 60 zur zweiten Leitung 58.

Im zweiten Zustand Z2 fließt der Strom von der Betriebsspannung 57 über den Schalter 53, den zweiten Wicklungsanschluss 12, die Wicklungsanordnung 30, den ersten Wicklungsanschluss 11, den Schalter 52, die Leitung 59 und den Fußpunktwiderstand 60 zu Masse 58.

Die übrigen Schalter sind im ersten Zustand Z1 und zweiten Zustand Z2 nicht-leitend geschaltet.

In Abhängigkeit von der Rotorstellung des Rotors 40 wird zwischen dem ersten Zustand Z1 und dem zweiten Zustand Z2 hin- und hergewechselt, um so den Rotor 40 anzutreiben. Dabei wird die Rotorstellung über den Rotorstellungssensor 67 erfasst. Die Erfassung kann aber auch sensorlos erfolgen.

Die beschriebene Ansteuerung für die normale Bestromung der Endstufe 50 im Betrieb ist beispielhaft, und der Fachmann kennt eine Vielzahl von Ansteuermöglichkeiten für Endstufen, also z.B. auch eine getaktete Ansteuerung von zumindest einem Teil der Schalter 51 bis 54 oder eine Block-Kommutierung.

Der Fußpunktwiderstand 60 dient dazu, den Strom durch die Endstufe 50 zu messen, damit die Steuervorrichtung 70 über die Leitung 72 einen Überstrom erkennen kann.

Die Steuervorrichtung 70 steuert die Schalter 51 bis 53, um den Motor 10 anzutreiben oder ggf. auch zu bremsen. Hierbei ist z.B. eine Drehzahlsteuerung, Drehzahlregelung, Leistungssteuerung, Leistungsregelung etc. möglich.

Da die Kommutierung über Schalter (hier 51 bis 54) und nicht über Kommutator-Bürsten erfolgt, wird der Motor auch als bürstenloser oder elektronisch kommutierter Motor bezeichnet.

## Start des Motors

Beim Start des Motors 10 aus Fig. 2 ist es möglich, dass der Rotor 40 eine ungünstige Rotorstellung hat, in der eine Bestromung der Wicklungsanordnung 30 über die Schalter 51, 54 bzw. 53, 52 kein oder nur ein sehr geringes Drehmoment erzeugt.

Über den dritten Wicklungsanschluss 13 ist es möglich, in einem dritten Zustand Z3 die Schalter 51 und 56 leitend zu schalten, so dass ein Strom von der ersten Leitung 57 über den Schalter 51, den ersten Wicklungsanschluss 11, die Spulen 31 und 32, den dritten Wicklungsanschluss 13, den Schalter 56, die Leitung 59, den Fußpunktwiderstand 60 zur zweiten Leitung 58 fließt. Die Bestromung erfolgt somit über eine erste Teilgruppe TG1 der Spulen 31 bis 36, die nur die Spulen 31 und 32 umfasst.

Ebenso ist es möglich, in einem vierten Zustand **Z4** die Schalter 53 und 56 leitend zu schalten, so dass ein Strom von der ersten Leitung 57 über den Schalter 53, den zweiten Wicklungsanschluss 12, die Spulen 36, 35, 34, 33, den dritten Wicklungsanschluss 13, den Schalter 56, die Leitung 59, den Fußpunktwiderstand 60 zur zweiten Leitung 58 fließt. Die Bestromung erfolgt somit über eine zweite Teilgruppe TG2 der Spulen 31 bis 36, die nur die Spulen 33 und 36 umfasst.

In diesem Ausführungsbeispiel sind somit in den Teilgruppen TG1, TG2 keine gemeinsamen Spulen enthalten, sondern es werden jeweils unterschiedliche Spulen bestromt.

Für das magnetische (innere) Drehmoment M_i des Motors 10 gilt

$$M\_i = k\_m \; I \tag{1}$$

mit

k_m = Drehmomentkonstante (auch Flussverkettung genannt)
I = Wicklungsstrom durch die Wicklung 30

Für das eigentliche Drehmoment (englisch: output torque) M muss noch das negativ wirkende Reibungsmoment M_R berücksichtigt werden.

Für die in die Wicklungsanordnung 30 induzierte (innere) Spannung (englisch: induced voltage) U_i gilt

$$U\_i = k\_m \; omega = k\_m \; 2 \; pi \; n/60 \tag{2}$$

mit

omega = $\omega$ = Winkelgeschwindigkeit
n = Drehzahl in min$^{-1}$

Die an den Wicklungsanschlüssen 11, 12 anliegende Spannung (armature voltage) U ergibt sich bei gesperrter Endstufe bzw. nicht-leitenden Endstufentransistoren 51, 52, 53, 54, 56 zu

$$U = I \; R + U\_i$$

mit
R = Widerstand der Wicklungsanordnung 30.

Die Drehmomentkonstante k_m ist dabei abhängig von der Rotorstellung phi des Rotors 40, also k_m = k_m(phi). An Stelle der Drehmomentkonstante k_m wird auch häufig die Spannungskonstante kE betrachtet, die proportional zu k_m ist und teilweise auch als Ke bezeichnet wird.

Wie aus den Gleichungen (1) und (2) zu sehen ist, stellt die Drehmomentkonstante k_m sowohl die Proportionalität zwischen dem Drehmoment M_i und dem Wicklungsstrom I als auch die Proportionalität zwischen der induzierten Spannung U_i und der Winkelgeschwindigkeit omega her. Daher ist es möglich, beispielsweise die Drehmomentkonstante k_m durch externes Antreiben des Rotors 40 mit einer konstanten Winkelgeschwindigkeit omega und gleichzeitigem Messen der induzierten Spannung U_i zu ermitteln, und der Verlauf der ermittelten Kurve ist proportional bzw. identisch zum Verlauf des magnetischen Drehmoments M_i .

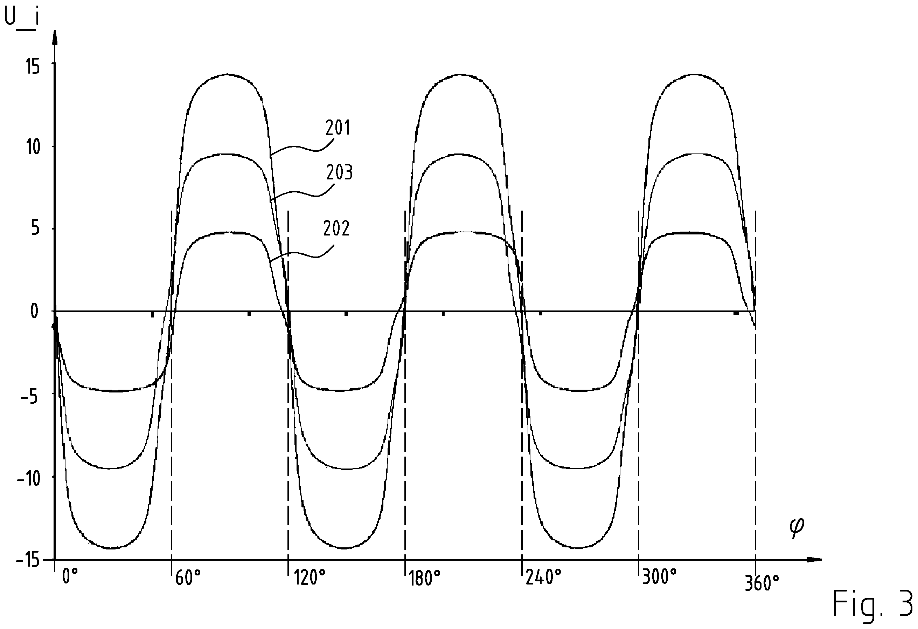

Fig. 3 zeigt eine Messung der induzierten Spannung U_i über eine volle Umdrehung des Rotors 40 von phi = 0 .. 360°.

Die Kurve 201 zeigt die induzierte Spannung U_i, die zwischen dem ersten Wicklungsanschluss 11 und dem zweiten Wicklungsanschluss 12 gemessen wird. Es ist zu sehen, dass die Kurve 201 sechs Nulldurchgänge hat, und wenn der Motor in einer Rotorstellung stehen bleibt, bei der die Kurve 201 einen Nulldurchgang hat, so kann durch eine Bestromung zwischen dem ersten Wicklungsanschluss 11 und dem zweiten Wicklungsanschluss 12 kein Drehmoment erzeugt werden.

Die Kurve 202 zeigt die induzierte Spannung U_i, die zwischen dem ersten Wicklungsanschluss 11 und dem dritten Wicklungsanschluss 13 in die Spulen 31, 32 (Teilgruppe TG1) induziert wird. Die Kurve 202 hat eine geringere Amplitude als die Kurve 201, da nur das Signal von den beiden Spulen 31, 32 addiert ist, und nicht das Signal aller sechs Spulen 31 bis 36 wie in der Kurve 201. Es ist zu sehen, dass die Nulldurchgänge der Kurve 202 bei anderen Rotorstellungen auftreten, als die Nulldurchgänge der Kurve 201.

Die Kurve 203 zeigt die induzierte Spannung U_i, die zwischen dem zweiten Wicklungsanschluss 12 und dem dritten Wicklungsanschluss 13 in die Spulen 33 bis 36 (Teilgruppe TG2) induziert wird. Die Kurve 203 hat eine geringere Amplitude als die Kurve 201 und eine größere Amplitude als die Kurve 202, da das Signal von den vier Spulen 33 bis 36 addiert ist. Es ist zu sehen, dass die Nulldurchgänge der Kurve 203 bei anderen Rotorstellungen auftreten, als die Nulldurchgänge der Kurven 201 und 202.

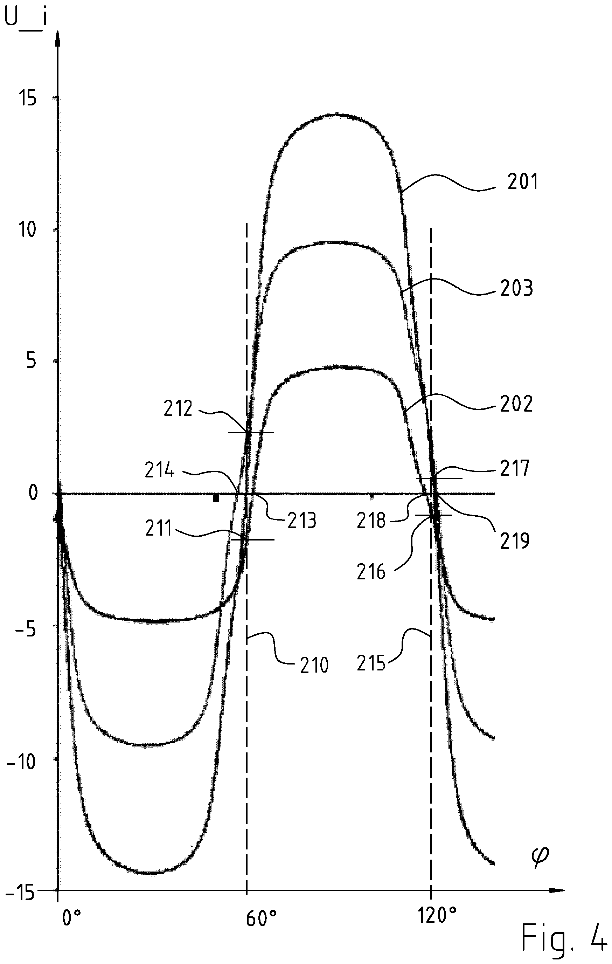

**Fig. 4** zeigt einen Ausschnitt aus Fig. 3 mit dem Winkelbereich von 0° bis ca. 150°.

Die Kurve 201, die die induzierte Spannung U_i zwischen dem ersten Wicklungsanschluss 11 und dem zweiten Wicklungsanschluss 12 wiedergibt, hat bei 60 ° einen Nulldurchgang, wobei der Winkel von 60° durch die senkrechte Linie 210 gekennzeichnet ist, und der Nulldurchgang bei 120 ° ist durch die senkrechte Linie 215 gekennzeichnet. An den Stellen 210 und 215 kann durch eine Bestromung zwischen den Wicklungsanschlüssen 11 und 12 kein Drehmoment erzeugt werden, da der Verlauf der Drehmomentkonstante k_m dem Verlauf der induzierten Spannung U_i entspricht, und diese jeweils einen Nulldurchgang haben.

Die Kurve 202 hat den Nulldurchgang jedoch an einer Stelle 213 (bei ca. 62°), die hinter der Stelle 210 liegt, und an der Stelle 210 hat die Kurve 202 noch einen negativen Wert, der als waagerechte Linie 211 gekennzeichnet ist.

Die Kurve 203 hat den Nulldurchgang vor der Stelle 210 an der Stelle 214 (bei ca. 57°), und an der Stelle 210 ist die Kurve 203 bereits in den positiven Bereich angestiegen, wobei der Wert mit einer waagerechten Linie 212 gekennzeichnet ist.

Dadurch, dass die Kurven 202, 203 an der Stelle 210 verschieden von Null sind, kann dort entweder über die der Kurve 202 zugeordneten Spulen 31, 32 (Teilgruppe TG1) oder aber über die der Kurve 203 zugeordneten Spulen 33 bis 36 (Teilgruppe TG2) ein Drehmoment erzeugt werden.

An der Stelle 215, die einer Rotorstellung von 120° entspricht, hat die Kurve 202 bereits bei einem kleineren Winkel an der Stelle 218 einen Nulldurchgang gehabt und ist auf einen negativen Wert gesunken, der durch eine waagerechte Linie 216 gekennzeichnet ist.

Die Kurve 203 hat den Nulldurchgang knapp hinter der Stelle 215 an der Stelle 219, und die Kurve 203 ist an der Stelle 215 leicht im positiven Bereich.

Wie zu erkennen ist, ist das über die Kurven 202, 203 erreichbare Drehmoment an der Stelle 215 kleiner als an der Stelle 210, und über eine Bestromung der der Kurve 202 zugeordneten Spulen 31, 32 kann eine größeres Drehmoment erzeugt werden als über die der Kurve 203 zugeordneten Spulen 33 bis 36.

An den Nulldurchgängen 213, 218 der Kurve 202 sind jeweils die anderen Kurven 201, 203 positiv bzw. negativ, und an den Nulldurchgängen 214, 219 der Kurve 203 sind jeweils die anderen Kurven 201, 202 positiv bzw. negativ, also ungleich Null.

Im Ergebnis kann bei jeder Rotorstellung phi ein Drehmoment erzeugt werden.

Nachdem das Prinzip grundlegend dargestellt wurde, wird im folgenden auf Details und Varianten eingegangen.

**Motortyp**

Die vorgestellte Lösung, mit der ein Drehmoment bei jeder Rotorstellung erzeugt werden kann, ist grundsätzlich unabhängig vom Motortyp. Es können z. B. Innenläufer, Außenläufer oder Scheibenläufer verwendet werden.

Der Stator 20 kann einen Statorkern (englisch: stator core) aufweisen, wie dies z. B. in Fig. 1 gezeigt ist, er kann aber auch ohne Statorkern ausgeführt werden, und dies wird auch als eisenlose Wicklung bezeichnet. Der Statorkern ist bevorzugt als Statorpaket bzw. Statorblechpaket ausgebildet, es sind jedoch auch andere Varianten möglich.

Die Anzahl S der Statorpole 21, 22, etc ist bevorzugt gerade und beträgt S = 2, 4, 6, 8, ... bzw. 2 * N mit N = 1, 2, 3, ...

Die Anzahl R der Rotorpole 41, 42, etc. entspricht bevorzugt der Anzahl S der Statorpole 21, 22, etc.

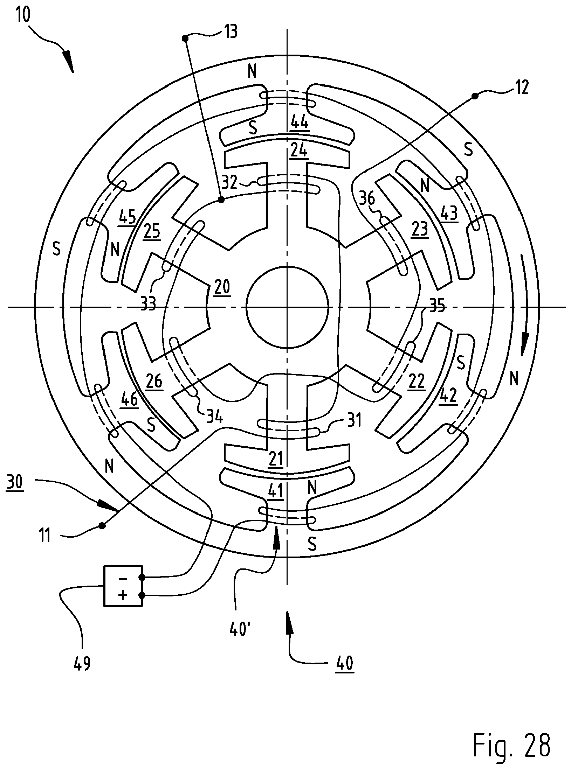

Bevorzugt ist der Rotor 40 ein permanentmagnetischer Rotor 40 mit permanentmagnetischen Rotorpolen 41, 42, etc. bzw. einem permanentmagnetischen Rotormagneten 40'. Es ist aber z.B. auch möglich, einen Motor mit elektromagnetisch erzeugten Rotorpolen 41, 42, etc. zu verwenden, bei denen z.B. jeder Rotorpol 41, 42 etc. eine in **Fig. 28** dargestellte, im Betrieb bestromte Wicklung aufweist, die durch eine Spannungsquelle 49 bestromt wird, und die Beispielsweise um ein Blechpaket gewickelt ist. Die Spannungsquelle 49 kann am Rotor 40 angeordnet sein, sie muss aber nicht zwingend im Rotor 40 angeordnet sein. Bei einer externen Anordnung kann eine elektrische Verbindung beispielsweise über Schleifkontakte oder andere Kontakte erfolgen, die eine elektrische Leitung trotz der Drehbewegung des Rotors ermöglichen. Bevorzugt erfolgt die Bestromung des Rotors 40 derart, dass die Rotormagneten 41, 42 etc. im Betrieb immer ein Magnetfeld in die gleiche Richtung erzeugen, so dass sie wie permanentmagnetische Rotormagneten 41, 42 etc. eingesetzt werden können.

Bei dem Ausführungsbeispiel aus Fig. 1 hat der Stator 20 sechs Nuten, in denen die Wicklungsanordnung verteilt ist. Daher wird ein solcher Motor auch als 6-nutig / 6-polig bezeichnet.

EP 2 965 418 B1

**Wicklungsanordnung und Beschaltung zur Teilbestromung der Spulen**

**Fig. 5** bis **Fig. 7** und **Fig. 26** zeigen verschiedene Varianten für die Beschaltung eines einphasigen, einsträngigen Motors mit **zwei Polen**. Die beiden Spulen 31, 32 haben den ersten Wicklungsanschluss 11 und den zweiten Wicklungsanschluss 12. Der erste Wicklungsanschluss 11 ist über den Schalter 51 zur ersten Leitung 57 hin und über den Schalter 52 zur zweiten Leitung 58 hin verbunden. Der zweite Wicklungsanschluss 12 ist über den Schalter 53 zur ersten 57 hin und über den Schalter 54 zur zweiten Leitung 58 hin geschaltet, wobei die Schalter 51 bis 54 eine Vollbrücken-Schaltung bilden. Zwischen den Spulen 31, 32 ist der dritte Wicklungsanschluss 13 angeordnet.

In **Fig. 5** ist der dritte Wicklungsanschluss 13 über den Schalter 56 zur zweiten Leitung 58 hin verbunden. Mit Hilfe des Schalters 56 kann ein Strom über den Schalter 51, die Spule 31 (Teilgruppe TG1) und den Schalter 56 fließen, oder aber ein Strom über den Schalter 53, die Spule 32 (Teilgruppe TG2) und den Schalter 56. Die Anordnung des Schalters 56 zur zweiten Leitung 58 hin hat den Vorteil, dass entsprechende Halbleiterschalter und Treiber-Schaltungen häufig günstiger sind als bei Schaltern, die zwischen der ersten Leitung 57 und einem Wicklungsanschluss 11, 12, 13 eingesetzt werden.

In **Fig. 6** ist der dritte Wicklungsanschluss 13 über einen Schalter 55 zur ersten Leitung 57 hin verbunden. Mit Hilfe des Schalters 55 kann ein Strom über den Schalter 55, die Spule 31 (Teilgruppe TG1) und den Schalter 52 fließen, oder aber ein Strom über den Schalter 55, die Spule 32 (Teilgruppe TG2) und den Schalter 54.

In **Fig. 7** ist der dritte Wicklungsanschluss 13 sowohl über den Schalter 55 zur Betriebsspannung 57 hin als auch über den Schalter 56 zu Masse 58 hin geschaltet. Dies ermöglicht es, die Spulen 31, 32 einzeln in beide Richtungen bestromen zu können. Dies kann z. B. erforderlich sein, wenn die Applikation überhaupt keine Drehung in die falsche Richtung erlaubt. In Fällen, bei denen dies unkritisch ist, wie z. B. bei einem Lüfter, führt die Verwendung von zwei Schaltern 55, 56 an dem dritten Wicklungsanschluss 13 jedoch zu unnötigen Mehrkosten.

**Fig. 26** entspricht der Schaltung aus Fig. 5, wobei der Wicklungsanschluss 13 nicht genau zwischen den beiden Spulen 31, 32 angeordnet ist, sondern innerhalb der ersten Spule 31. Es ist also grundsätzlich bei allen Ausführungsbeispielen möglich, den Wicklungsanschluss 13 auch innerhalb einer Spule 31, 32 anzuordnen, und im vorliegenden Beispiel können durch Bestromung zwischen den Wicklungsanschlüssen 11, 13 zwei Drittel der Spule 31 bestromt werden, und durch Bestromung zwischen den Wicklungsanschlüssen 13, 12 kann ein Drittel der Spule 31 und die gesamte Spule 32 bestromt werden. Dies ergibt die folgenden möglichen Teilgruppen:

TG1 = (2/3 von Spule 31)
TG2 = (Spule 32 und 1/3 von Spule 31)

**Fig. 8** zeigt eine einphasige, zweisträngige Wicklungsanordnung für einen Stator mit zwei Statorpolen, bei der ein erster Strang die Spulen 31, 32 und ein zweiter Strang die Spulen 33, 34 umfasst. Jeder der Stränge kann nur in eine Richtung von der Leitung 57 (UB) zur Leitung 58 (GND) hin verbunden werden. Eine Bestromung des Strangs mit den Spulen 31, 32 wirkt genau entgegengesetzt wie eine Bestromung des Strangs mit den Spulen 33, 34, wie dies durch die schwarzen Punkte neben den Spulen 31, 32, 33, 34 gekennzeichnet ist. Die Spulen 31, 32 haben die Wicklungsanschlüsse 11, 12, und die Spulen 33, 34 die Wicklungsanschlüsse 11, 12'. Der Wicklungsanschluss 12 ist über einen Schalter 52 zur Leitung 58 (GND) hin verbunden, und der Wicklungsanschluss 12' über einen Schalter 54 zur Leitung 58 (GND) hin. Die beiden Stränge sind bevorzugt als bifilare Wicklung ausgebildet, es kann aber auch nach einander gewickelt werden,

Zwischen den Spulen 31, 32 des ersten Strangs ist ein dritter Wicklungsanschluss 13 vorgesehen, der über einen Schalter 56 zur Leitung 58 (GND) hin verbunden ist, um beim Start eine Bestromung der Spule 31 zu ermöglichen. Dies ergibt die folgenden Möglichkeiten zur Bestromung

Erster Strang = (Spule 31, Spule 32)
Zweiter Strang = (Spule 33, Spule 34)
Teilgruppe TG1 = (Spule 31)

Während des normalen Betriebs, also nach dem Anlauf des Motors 10, erfolgt die Bestromung abwechselnd über die Schalter 52 und 54.

Eine solche Anordnung ist naturgemäß auch mit einer höheren Anzahl S von Statorpolen möglich, z.B. mit S = 4, 6, 8, 10 etc.

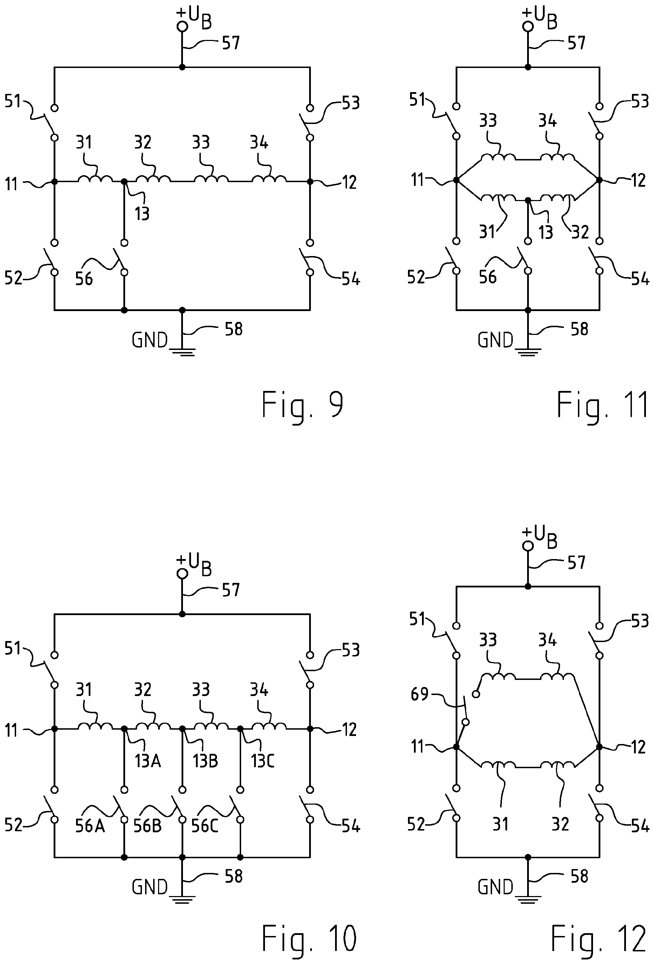

**Fig. 9** bis **Fig. 12** zeigen - nicht abschließend - verschiedene Varianten für die Beschaltung eines einphasigen Motors mit **vier Polen**. Die vier Spulen 31 bis 34 haben einen ersten Wicklungsanschluss 11 und einen zweiten Wicklungsanschluss 12. Die Wicklungsanschlüsse 11 und 12 sind über eine Vollbrückenschaltung mit den Schaltern 51, 52, 53, 54 zwischen der ersten Leitung 57 und der zweiten Leitung 58 geschaltet.

In **Fig. 9** und **Fig. 10** sind die vier Spulen 31 bis 34 in Reihe geschaltet.

In **Fig. 9** ist der dritte Wicklungsanschluss 13 über den Schalter 56 zur zweiten Leitung 58 hin verbindbar.

In **Fig. 10** ist zwischen den Spulen 31 und 32 ein Wicklungsanschluss 13A vorgesehen, zwischen den Spulen 32 und 33 ein Wicklungsanschluss 13B und zwischen den Spulen 33 und 34 ein Wicklungsanschluss 13C. Die Wicklungsanschlüsse 13A, 13B und 13C sind jeweils über einen Schalter 56A, 56B, 56C zur zweiten Leitung 58 hin verbindbar. Das Vorsehen von drei zusätzlichen Schaltern 56A, 56B, 56C ist zwar teurer als eine Variante mit nur einem Schalter 56, sie ermöglicht jedoch die Verwendung eines Rotors 40 bzw. eines Rotormagneten 40' mit geringerer Asymmetrie, da über die Verschaltung variabler bestimmte Rotorpole beeinflusst werden können. Möglich ist z.B. eine Bestromung der folgenden Teilgruppen der Spulen 31 bis 36:

TG1 = (31)
TG2 = (31, 32)
TG3 = (31, 32, 33)
TG4 = (34)
TG5 = (34, 33)
TG6 = (34, 33, 32)

Dabei ist mindestens ein Teil der Spulen 31 bis 36 in mehreren der Teilgruppen TG1 bis TG6 vorhanden.

Bei dieser Variante ist es möglich, zusätzlich an den Wicklungsanschlüssen 13A, 13B, 13C - nicht dargestellte - Schalter 55A, 55B, 55C vorzusehen, um eine Verschaltung zur ersten Leitung 57 hin zu ermöglichen. Hierdurch können die Spulen 31 bis 36 mit noch mehr Varianten angesteuert werden, und bei einer so beschalteten Wicklungsanordnung ist die Asymmetrie in einem einzigen Rotorpol ausreichend, um bei jeder Rotorstellung ein Drehmoment erzeugen zu können.

In **Fig. 11** und **Fig. 12** sind die Spulen 31 und 32 zwischen den Wicklungsanschlüssen 11, 12 in Reihe geschaltet und die Spulen 33, 34 ebenfalls zwischen den Wicklungsanschlüssen 11, 12 in Reihe geschaltet, so dass die Spulen 31, 32 zu den Spulen 33, 34 parallel geschaltet sind.

In **Fig. 11** ist zwischen den Spulen 31, 32 der dritte Wicklungsanschluss 13 vorgesehen, und dieser ist über den Schalter 56 zur zweiten Leitung 58 hin verbindbar. Hierdurch kann beim Starten eine der Spulen 31 (Teilgruppe TG1, über die Schalter 51, 56) oder 32 (Teilgruppe TG2, über die Schalter 53, 56) bestromt werden.

In **Fig. 12** ist eine andere Möglichkeit gezeigt, um nur einen Teil der Spulen 31 bis 34 zu bestromen. Ein Schalter 69 ist im Teilstrang (Zweig) mit den Spulen 33, 34 zwischen dem ersten Wicklungsanschluss 11 und der Spule 33 vorgesehen, und über diesen Schalter 69 kann der Teilstrang mit den Spulen 33, 34 beim Start von der Bestromung ausgenommen werden. Für eine solche Variante ist es vorteilhaft, wenn zumindest ein Teil der Spulen parallel geschaltet sind. Es existiert somit eine Teilgruppe TG1 = (31, 32). Ein Nachteil dieser Lösung ist, dass bei der Bestromung im normalen Betrieb über die Wicklungsanschlüsse 11, 12 ständig ein Strom über den Schalter 69 fließt. Dies führt zu Verlusten, und es ist ggf. ein teurer Schalter 69 mit geringem Widerstand und/oder eine gute Kühlung erforderlich. Da der Schalter 69 jedoch im normalen Betrieb nicht geschaltet wird, ist z.B. die Verwendung eines Relais möglich. Der Schalter 69 kann auch zwischen den Spulen 33, 34 oder zwischen der Spule 34 und dem zweiten Wicklungsanschluss 12 oder in einer der Spulen 33, 34 angeordnet werden. Außerdem ist es möglich, den Wicklungsanschluss 11 für die beiden Zweige 31, 32 bzw. 33, 34 zu trennen und für jeden Wicklungszweig einen Schalter 51 und 52 vorzusehen, oder aber beispielsweise bei einer Wicklungsanordnung mit drei parallelen Teilsträngen über den Schalter 69 entweder nur einen Teilstrang oder aber zwei Teilstränge abschaltbar auszubilden. Es ist auch möglich, zusätzlich einen dritten Wicklungsanschluss vorzusehen, um weiter Möglichkeiten zur Bestromung von Teilgruppen der Spulen zu haben.

## Erzeugung der Asymmetrie

Bei einem symmetrischen Stator 20 und symmetrischen Rotor 40 kann auch durch eine Bestromung eines Teils bzw. einer Teilgruppe der Spulen 21 bis 26 kein Drehmoment erzeugt werden, da in jede der Spule 31 bis 36 die genau gleiche Spannung $U\_i$ induziert wird.

Daher muss entweder am Stator 20 oder am Rotor 40 oder aber an beiden eine Asymmetrie vorhanden sein, so dass die - im normalen Betrieb - in die einzelnen Spulen 31, 32 etc. induzierte Spannung zumindest teilweise unterschiedlich voneinander ist.

## Asymmetrie am Rotor

Eine Asymmetrie kann darüber erreicht werden, dass sich die Winkelerstreckung mindestens eines der Rotorpole 41 bis 46 von der Winkelerstreckung mindestens eines anderen der Rotorpole 41 bis 46 unterscheidet, dass also der Rotormagnet 40' asymmetrisch ausgebildet ist. In Fig. 1 haben bspw. die Rotorpole 41, 44 jeweils eine Winkelerstreckung von 60°, die Rotorpole 42, 45 eine Winkelerstreckung von 55° und die Rotorpole 43, 46 eine Winkelerstreckung von 65°. Bei dieser Anordnung entspricht die Winkelverteilung der Rotorpole 41, 42, 43 der Winkelverteilung 44, 45, 46. Dies hat den Vorteil, dass bei jeder Halbierung des Rotors 40 auf beiden Seiten die gleiche Menge an Nord-Süd bzw.

Süd-Nord-Polen ist. Dies ist sowohl positiv für das Gesamt-Drehmoment des Motors 10 als auch für die Geräuschentwicklung. Zudem ist es positiv, wie in Fig. 1 für die Teilbestromung der Spulen 31 bis 36 zwei gegenüberliegende Statorpole 21, 24 zu wählen, da diese beiden Statorpole 21, 24 bzw. die zugeordneten Spulen 31, 32 magnetisch gesehen den gleichen Magneten 41 bzw. 44 "sehen", so dass sich das bei der Bestromung der Spulen 31, 32 ergebende Drehmoment in Verbindung mit den Rotorpolen 41, 44 addiert.

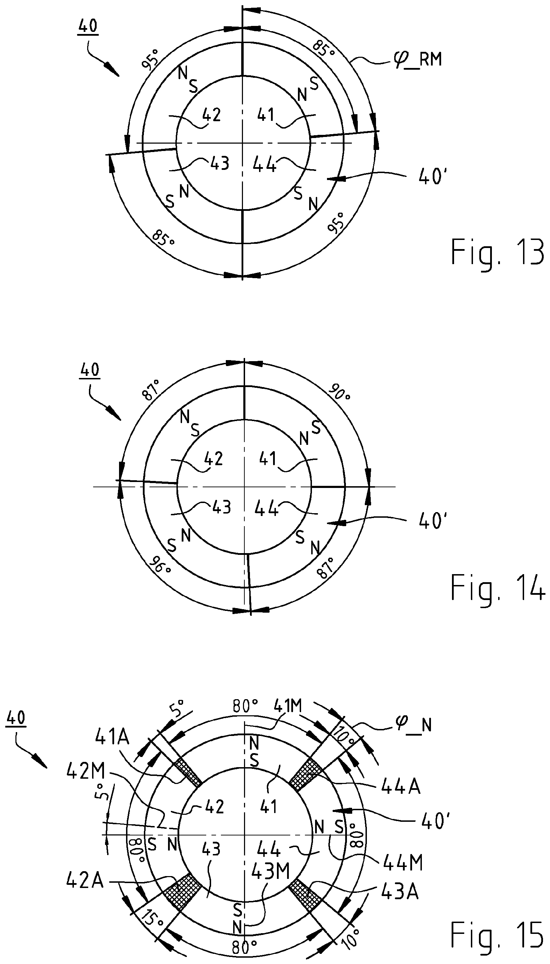

**Fig. 13** bis **Fig. 16** zeigen beispielhaft verschiedene Ausführungsformen für vierpolige Rotoren 40 mit den vier Rotorpolen 41, 42, 43 und 44.

In **Fig. 13** haben die einander gegenüber liegenden Rotorpole 41, 43 eine Winkelerstreckung phi_RM von jeweils 85°, und die Rotorpole 42, 44 haben jeweils eine Winkelerstreckung phi_RM von 95°.

In **Fig. 14** hat der Rotorpol 41 eine Winkelerstreckung phi_RM von 90°, die zu diesem benachbarten Rotorpole 42, 44 haben eine Winkelerstreckung phi_RM von 87°, und der Rotorpol 43 des Rotormagneten 40' hat eine Winkelerstreckung phi_RM von 96°. Die Verwendung von drei unterschiedlichen Winkelerstreckungen phi_RM bietet grundsätzlich mehr Möglichkeiten, beim Start ein Drehmoment zu erzeugen, als bei dem Rotor 40 aus Fig. 13, und bei einem solchen Rotor 40 kann mit der einfachen Endstufe gemäß Fig. 9 auch mit einem symmetrischen Stator 20 in jeder Rotorstellung ein Drehmoment erzeugt werden. Da jedoch bei der Halbierung eines solchen Rotors 40 nicht auf jeder Hälfte die gleiche Anzahl an gleich magnetisiertem Polmaterial vorhanden ist, kann dies zu einem radialen Zug führen, was unerwünscht ist. Daher sollten die Unterschiede möglichst gering gehalten werden.

In **Fig. 15** haben die Rotorpole 41 bis 44 des Rotormagneten 40' jeweils die gleiche Winkelerstreckung phi_RM = 80°. Zusätzlich sind zwischen den Rotorpolen 41 bis 44 jeweils neutrale Zonen 41A bis 44A vorgesehen, und über deren Asymmetrie kann ebenfalls eine Asymmetrie des Rotors 40 bzw. des Rotormagneten 40' erzeugt werden, die einen Start des Motors ermöglicht. Hierzu haben die Zwischenbereiche 44A (zwischen den Rotorpolen 44 und 41) und 43A (zwischen den Rotorpolen 43 und 44) eine Winkelerstreckung phi_N = 10°, der Zwischenbereich 41A (zwischen den Rotorpolen 41, 42) eine Winkelerstreckung phi_N = 5° und der Zwischenbereich 42A (zwischen den Rotorpolen 42 und 43) eine Winkelerstreckung phi_N = 15°. Die Asymmetrie wird deutlich bei Betrachtung der magnetischen Mitten 41M bis 44M der Rotorpole 41 bis 44. Die magnetischen Mitten 41M, 44M und 43M haben jeweils einen Winkelabstand von 90° bzw. allgemein von 360°/R mit R = Anzahl Rotorpole, und die magnetische Mitte 42M ist um 5° aus dem 90°-Raster verschoben. Hierdurch beträgt der Winkelabstand zwischen der magnetischen Mitte 41M und der magnetischen Mitte 42M 85°, und der Winkelabstand zwischen der magnetischen Mitte 42M und 43M beträgt 95°.

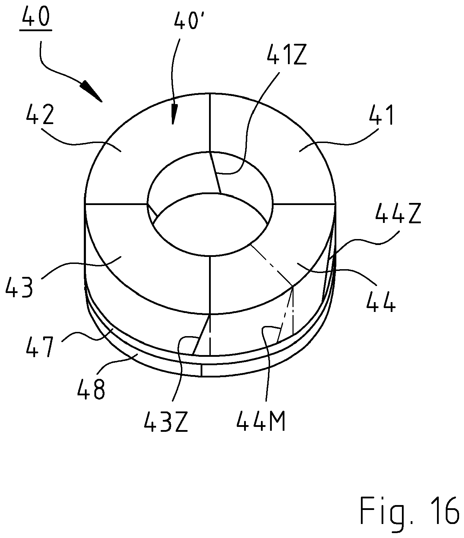

**Fig. 16** zeigt einen Rotor 40 mit vier Polen 41, 42, 43, 44 des Rotormagneten 40', einem axial unterhalb der Pole angeordneten neutralen Bereich 47 und bevorzugt einer axial unterhalb des neutralen Bereichs 47 angeordneten Magnetspur 48. Die Polgrenzen zwischen den Polen 41, 42, 43 und 44 sind jeweils geschrägt, wobei die Polgrenzen 43Z (zwischen den Polen 43, 44) und 44Z (zwischen den Rotorpolen 44 und 41) auf der Umfangsseite des Rotormagneten 40' zu sehen sind, und wobei die schräge Polgrenze 41Z zwischen den Rotorpolen 41 und 42 auf der Innenseite des Rotors 40 zu sehen ist. Auch bei einer solchen Ausgestaltung ist die Betrachtung der magnetischen Mitte hilfreich, die beispielsweise beim Rotorpol 44 als 44M eingezeichnet ist.

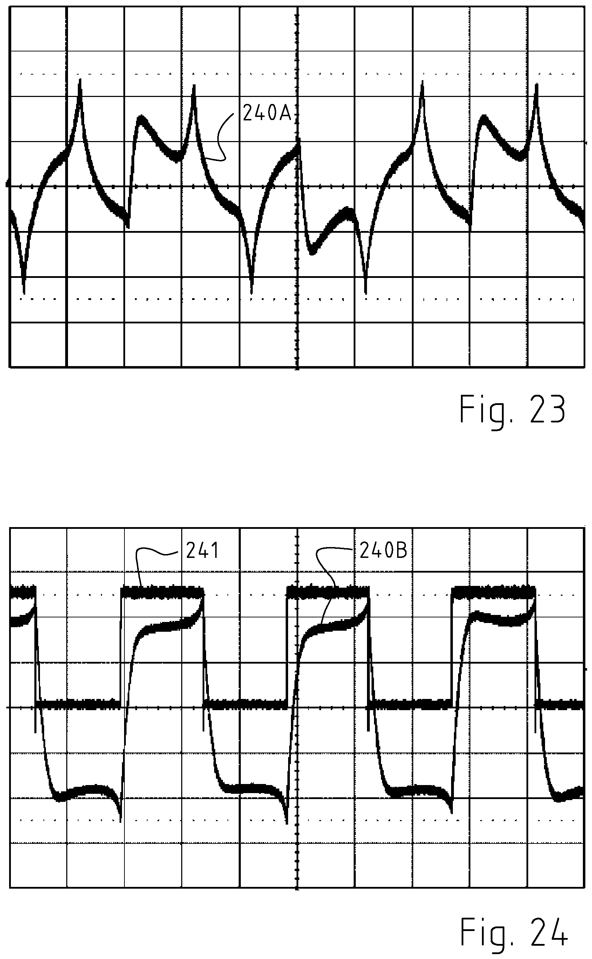

Die zusätzliche Magnetspur 48, die auf vielfältige Art und Weise relativ zu den Polen 41 bis 44 angeordnet sein kann, dient dazu, ein für die Rotorstellungssensoren geeignetes Sensor-Magnetfeld zu erzeugen, um eine gute Kommutierung zu ermöglichen. Dies ist insbesondere wichtig, wenn die Pole 41 bis 44 unterschiedliche Winkelerstreckungen haben, vgl. Beschreibung zu Fig. 23.

Die Asymmetrie am Rotor 40 bzw. am Rotormagneten 40' kann auch durch die Verwendung unterschiedlicher magnetischer Materialien oder eine Asymmetrie bei der Magnetisierung des permanentmagnetischen Rotormagneten 40' erzeugt werden.

**Asymmetrie am Stator**

Eine Asymmetrie des Stators 20 aus Fig. 1 kann z. B. dadurch erreicht werden, dass mindestens einer der Pole 21 bis 26 etwas gedreht angeordnet ist, so dass er einen Winkelabstand von mindestens einem der übrigen Statorpolen 21 bis 26 hat, der ungleich 60° oder einem Mehrfachen davon ist. Hier sind natürlich auch Varianten möglich.

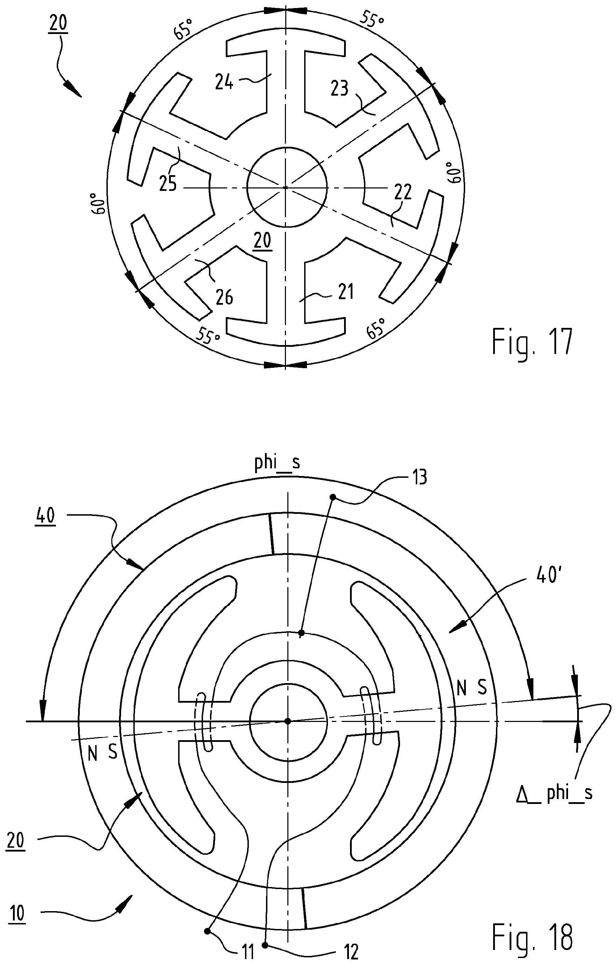

**Fig. 17** zeigt einen Stator 20 mit sechs Statorpolen 21 bis 26, von denen die Statorpole 21 und 24 gegenüber den Statorpolen 22, 23, 25, 26 leicht im Uhrzeigersinn gedreht ausgebildet sind. Der Winkel zwischen den Polen 21, 22 und den Polen 24, 25 beträgt jeweils 65°, der Winkel zwischen den Polen 22, 23 und den Polen 25, 26 jeweils 60° und der Winkel zwischen den Polen 23, 24 und 26, 21 jeweils 55°.

**Fig. 18** zeigt eine Asymmetrie an einem zweipoligen Stator 20. Hierbei sind die beiden Pole nicht genau in einem Winkelabstand phi_s von 180 ° (360° / S mit S = 2) angeordnet, sondern z. B. in einem Winkelabstand phi_s = 175 ° (bzw. 185° von der gegenüberliegenden Seite gesehen). Der Winkelabstand Delta_phi_s vom Standardwinkel 180° wird dabei möglichst klein gewählt, da er zu einem etwas schlechteren Wirkungsgrad des Motors 10 führt. Insbesondere beim zweipoligen Motor ist die Asymmetrie am Stator 20 vorteilhaft. Wird nämlich bei einem einphasigen zweipoligen Motor nur eine Asymmetrie am Rotor 40 vorgesehen, so gibt es weiterhin eine Rotorstellung, bei der beide Spulen 31, 32 der beiden Statorpole 21, 22 gleichzeitig einen Nulldurchgang haben, wenn nämlich die Mitte jedes der Rotorpole 41, 42 genau einem der Statorpole 21, 22 gegenüber steht.

## Vorteile gegenüber einem einphasigen Motor mit Reluktanz-Hilfsmoment

Bei der Rotorpolverteilung gemäß Fig. 1 (65°, 60°, 55°, 65°, 60°, 55°) wurde ermittelt, dass die Spannungskonstante kE gegenüber einem Rotor 40 mit symmetrischen Rotorpolen und symmetrischem Stator ungefähr um zwei Prozent verringert ist.

Dies ist jedoch ein geringerer Verlust als bei einem Motor mit einem Reluktanzschnitt zur Erzeugung eines Reluktanz-Hilfsmoments, bei dem also der Luftspalt zwischen dem Statorpol und dem Rotormagneten 40' jeweils in Umfangsrichtung in eine Richtung gesehen zunimmt, denn die Größe des Luftspalts beeinflusst den magnetischen Fluss zwischen Rotor und Stator und damit auch die Spannungskonstante kE. Somit kann der erfindungsgemäße Motor eine höhere Leistung liefern als ein entsprechender einphasiger Motor mit Reluktanz-Hilfsmoment, und der Wirkungsgrad ist besser.

Das Rastmoment (engl.: cogging torque) des erfindungsgemäßen einphasigen Motors ist gegenüber einem herkömmlichen einphasigen Motor mit Reluktanz-Hilfsmoment deutlich reduziert. Dies ist verständlich, da ein Motor mit Reluktanz-Hilfsmoment genau dazu ausgebildet ist, dass der Rotor in einer Rotorstellung einrastet, die zum Starten geeignet ist. Die Messungen haben eine Verringerung des Rastmoments zwischen 50 % und 90 % gegenüber einem Motor mit Reluktanz-Hilfsmoment ergeben. Dies hat den großen Vorteil, dass auch weniger Motorgeräusche entstehen, da ein geringeres Rastmoment zu geringeren Motorgeräuschen führt.

Einphasige Motoren, deren Startposition über ein Reluktanz-Hilfsmoment festgelegt wird, setzen eine Anwendung voraus, bei der kein größeres externes Drehmoment und keine allzu große Reibung auftreten, also z.B. eine Lüfter-Anwendung oder einen Motor für einen CD-Spieler. Bei dem erfindungsgemäßen einphasigen Motor sind zusätzliche Anwendungen möglich, bei denen auch mittlere externe Drehmomente wirken können oder größere Reibung auftritt, wie z.B. bei Flüssigkeitspumpen. Damit ist der mögliche Einsatzbereich des erfindungsgemäßen Motors größer als bei einem einphasigen Motor mit Reluktanz-Hilfsmoment, aber kleiner als bei einem dreiphasigen Motor.

## Vorteile gegenüber einem dreiphasigen Motor

Beispielhaft werden die Kostenvorteile bei der Verwendung einer einphasigen Wicklungsanordnung 30 mit einem dritten Wicklungsanschluss 13 und einem Schalter 56 gemäß Fig. 2 mit einem dreiphasigen Motor mit Vollbrückenschaltung verglichen.

Eine Vollbrückenschaltung für einen dreiphasigen Motor hat drei obere (zur Betriebsspannung hin geschaltete) Schalter (high side-Schalter) und drei untere (zu Masse hin geschaltete) Schalter (low side-Schalter).

Die Vollbrückenschaltung für den einphasigen Motor aus Fig. 2 hat dagegen nur zwei obere Schalter 51, 53 und zwei untere Schalter 52, 54. Zusätzlich ist ein unterer Schalter 56 für den dritten Wicklungsanschluss vorgesehen. Somit fällt einerseits ein oberer Schalter und ggf. ein zugeordneter Treiberbaustein weg. Zudem kann für den unteren Schalter 56 ein einfacherer und günstigerer Typ mit größerem Innenwiderstand verwendet werden, da der Schalter 56 nur beim Start genutzt wird und die Verlustleistung bzw. die Wärmeerzeugung durch den Schalter 56 daher unkritisch ist.

Außerdem sind bei einem Motor mit Rotorstellungssensoren (z.B. Hall-Sensoren) beim dreiphasigen Motor drei Rotorstellungssensoren erforderlich, beim einphasigen Motor dagegen nur einer. Es sind aber in beiden Fällen auch sensorlose Motorsteuerung möglich.

Eine Kalkulation bei mehreren leistungsstarken Lüftern der Anmelderin hat ergeben, dass eine sehr große Kostenreduktion für den Antrieb (Motor und Elektronik) in der Größenordnung von 10 % möglich ist.

Ein weiterer Vorteil des erfindungsgemäß einphasigen Motors ist, dass grundsätzlich die gleichen Statorkerne bzw. Blechpakete wie beim dreiphasigen Motor ohne Reluktanz-Hilfsmoment verwendet werden können. Hierdurch kann das selbe Stanzwerkzeug sowohl für einen dreiphasigen als auch für einen einphasigen Stator verwendet werden, z.B. mit einer Anzahl S von Statorpolen von S = 6, 12, 18, etc.

Es können aber auch rein einphasige Varianten gewählt werden mit S = 2, 4, 8, etc.

## Vergleichsmessungen mit unterschiedlichen Motortypen

Es wurden Messungen des Rastmoments und der Spannungskonstante kE, die proportional zu k_M ist, durchgeführt. Die ermittelten Kurven für die Spannungskonstante kE beziehen sich jeweils auf das Signal einer Spule.

Folgende Motortypen wurden untersucht

| Bezeichnung | S | R | Höhe Blechpaket | Außendurchmesser Blechpaket | Besonderheiten |
|---|---|---|---|---|---|
| M231 | 4 | 4 | 14 mm | 54 mm | einphasig, ohne Reluktanz-Hilfsmoment, geschrägt |
| M232 | 6 | 6 | 14 mm | 54 mm | einphasig, mit Reluktanz-Hilfsmoment |
| M233 | 6 | 6 | 15 mm | 56 mm | einphasig, mit Reluktanz-Hilfsmoment |
| M234 | 6 | 4 | 14 mm | 54 mm | dreiphasig, ohne Reluktanz-Hilfsmoment |

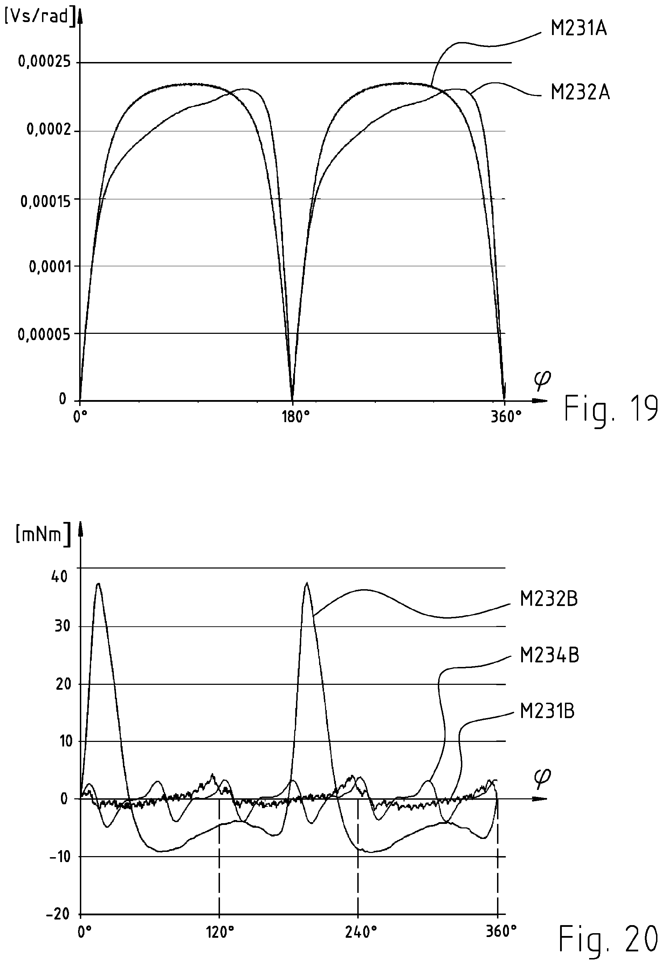

**Fig. 19** zeigt die Messung der Spannungskonstante kE für die Motoren M231 und M232, jeweils über eine Drehung des Rotors über die Erstreckung von zwei Rotorpolen.

Die Kurve M231A zeigt die Spannungskonstante kE für einen erfindungsgemäßen Motor M231, wobei dieser kein Reluktanz-Hilfsmoment aufweist. Daher ist die Kurve M231A weitgehend symmetrisch um ein mittleres Maximum.

Die Kurve M232A zeigt die Spannungskonstante kE für einen bekannten einphasigen Motor mit Reluktanz-Hilfsmoment. Es ist gut zu sehen, dass die Kurve M232A jeweils von links nach rechts ansteigt und erst im rechten Bereich ihr Maximum erreicht.

Bei dieser Messung wurde ermittelt, dass die Fläche unter der Kurve M231A ca. 3 % größer ist als die Fläche unter der Kurve M232A, und dies führt zu einem etwas größeren Wirkungsgrad.

Die Kurve M231A wurde mit einem 4-nutigen Motor (S = 4) gemessen, und die Kurve M232A mit einem 6-nutigen Motor (S = 6). Es wird vermutet, dass die Fläche unter der Kurve M231A relativ zur Fläche unter der Kurve M232A prozentual noch größer wäre, wenn ein Vergleich mit einem 6-nutigen Motor durchgeführt würde.

**Fig. 20** zeigt eine Messung des Rastmoments für die Motoren M231, M232 und M234, jeweils über eine Drehung des Rotors über die Erstreckung von zwei Rotorpolen.

Die Kurve M232B zeigt den einphasigen Motor M232 mit Reluktanz-Hilfsmoment, und das Rastmoment ist entsprechend sehr groß. Die Kurve M231B zeigt das Rastmoment für den erfindungsgemäßen einphasigen Motor M232 (hier ohne Reluktanz-Hilfsmoment), und das Rastmoment ist gegenüber der Kurve M232B um 87 % reduziert. Der unruhige Verlauf der Kurve M231B kommt vermutlich daher, dass eine andere Messapparatur zur Messung verwendet wurde.

Zum Vergleich ist noch eine Kurve M234B eingezeichnet, die das Rastmoment des dreiphasigen Motors M234 ohne Reluktanz-Hilfsmoment zeigt. Im Ergebnis kann mit dem erfindungsgemäßen Motor M231 entsprechend Kurve M231B ein Rastmoment erreicht werden, das deutlich kleiner ist als das eines bisherigen einphasigen Motors mit Reluktanz-Hilfsmoment, und das vergleichbar ist mit dem Rastmoment eines dreiphasigen Motors. Dies führt zu einer deutlichen Geräuschreduzierung gegenüber dem bekannten einphasigen Motor.

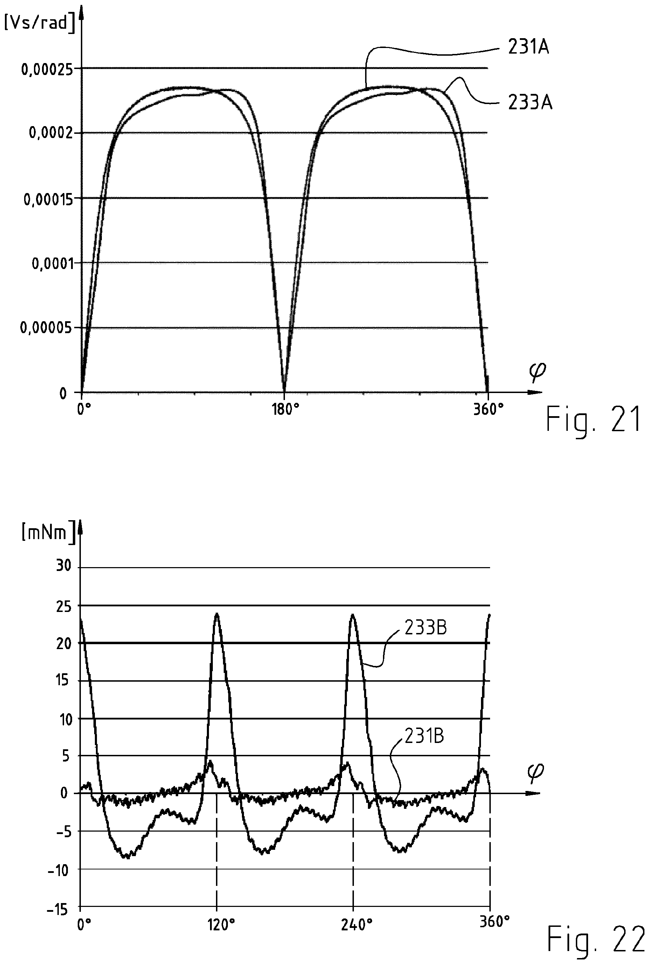

**Fig. 21** zeigt die Messung der Spannungskonstante kE für die Motoren M231 und M233, jeweils über eine Drehung des Rotors über die Erstreckung von zwei Rotorpolen.

Die Kurve M231A zeigt die Spannungskonstante kE für einen erfindungsgemäßen Motor M231, wobei dieser kein Reluktanz-Hilfsmoment aufweist. Daher ist die Kurve M231A weitgehend symmetrisch um ein mittleres Maximum.

Die Kurve M233A zeigt die Spannungskonstante kE für den einphasigen Motor M233 mit Reluktanz-Hilfsmoment, wie er derzeit von der Anmelderin in großer Stückzahl eingesetzt wird.

Die Motoren M231 und M233 haben zwar einen leicht unterschiedlichen Außendurchmesser und eine leicht unterschiedliche Höhe des Blechpakets. Der Motor M233 hat jedoch einen kleineren Wickelkopf und damit eine vergleichbare axiale Höhe des Gesamt-Stators, und beide Motoren M231, M233 sind daher in den selben Applikationen einsetzbar.

Bei der Kurve M233A ist zu sehen, dass der zugehörige Stator ein Reluktanz-Hilfsmoment durch einen sich in Umfangsrichtung verkleinernden Luftspalt hat, da die Kurve M233A im oberen Bereich ansteigt und erst auf der rechten Seite das Maximum erreicht.

Bei dieser Messung wurde ermittelt, dass die Fläche unter der Kurve M231A etwa 1,6 % größer ist als die Fläche unter der Kurve M233A, so dass der erfindungsgemäße Motor M231A einen höheren Wirkungsgrad hat.

**Fig. 22** zeigt eine Messung des Rastmoments für die Motoren M231, M233. Die Kurve M233B zeigt das Rastmoment des Motors M233, und die Kurve M231B das Rastmoment des erfindungsgemäßen Motor M231.

Der erfindungsgemäße Motor M231 erreicht bei vergleichbarem Wirkungsgrad eine Reduzierung des Rastmoments um 80,2 %, und dies führt zu einem deutlich geräuschärmeren Motor.

## Verbesserung der Rotorlageerfassung

**Fig. 23** zeigt eine Messung des Stroms durch die Endstufe 50 aus Fig. 2, gemessen am Fußpunktwiderstand 60. Das Signal 240A zeigt den gemessenen Strom. Dieser ist sehr unregelmäßig, und dies ist darauf zurückzuführen, dass der Rotorstellungssensor 67 (vgl. Fig. 2) die Rotorstellung anhand der asymmetrischen Rotorpole 41 bis 46 aus Fig. 1 ermittelt. Abhängig davon, ob ein Rotorpol aktuell größer, kleiner oder entsprechend 360°/R ist, erfolgt die Kommutierung entweder zu früh, zu spät oder richtig, und hierdurch erreicht der Strom häufig zu früh oder zu spät sein Maximum. Der Motor funktioniert zwar, der Wirkungsgrad ist jedoch schlecht.

Daher wurde beim Rotor 40 aus Fig. 16 eine zusätzliche, symmetrische Magnetspur 48 vorgesehen und so relativ zum Rotorstellungssensor 67 angeordnet, dass dieser die zusätzliche Magnetspur 48 erfassen kann.

**Fig. 24** zeigt das Signal 241 des Rotorstellungssensors 67 aus Fig. 2, und dieses ist auf Grund der zusätzlichen, symmetrischen Magnetspur 48 ebenfalls symmetrisch. Die Motorsteuerung 70 kann auf Grundlage des Signals 241 die Kommutierung durchführen, und der hieraus resultierende Strom 240B ist deutlich besser als der Strom 240A aus Fig. 23. Hierdurch wird der Wirkungsgrad des Motors 10 erhöht.

Alternativ ist auch eine Optimierung der Kommutierung durch die Steuervorrichtung 70 aus Fig. 2 möglich, indem diese z.B. bei konstanter Geschwindigkeit die Winkelerstreckung der einzelnen Pole misst, die proportional zur Zeit zwischen den Polwechseln ist. Anschließend kann die Steuervorrichtung 70 bei der aktuellen Drehzahl über Timer ausgehend vom letzten Polwechsel bestimmen, wann die nächste Kommutierung erfolgen soll.

## Überblick Startverfahren

Da über eine Bestromung der gesamten Wicklungsanordnung 30 oder aber über eine Bestromung einer ersten Teilgruppe TG1 (z.B. Spulen 31, 32 in Fig. 1) und ggf. auch weiterer Teilgruppen TG2 (z.B. Spulen 33 bis 36 in Fig. 1) etc. der Wicklungsanordnung 30 ein Drehmoment erzeugt werden kann, ist auch ein Start des Motors möglich.

## Startverfahren 1

Eine einfach Variante zum Starten des Motors 10 besteht darin, den Rotor 40 durch eine erste Bestromung der ersten Teilgruppe TG1 der Wicklungsanordnung 30 in eine vorgegebene erste Rotorstellung RS1 relativ zu der ersten Teilgruppe TG1 der Wicklungsanordnung 30 zu bewegen, und ausgehend von dieser Rotorstellung RS1 durch eine zweite Bestromung der gesamten Wicklungsanordnung 30 oder aber einer zweiten Teilgruppe TG2 den Motor 10 zu starten. Die Richtung der zweiten Bestromung und ggf. auch der ersten Bestromung erfolgt bei der Verwendung eines Rotorstellungssensors 67 (vgl. Fig. 2) bevorzugt in Abhängigkeit von dem Signal des Rotorstellungssensors 67.

Nach dem erfolgreichen Start kann auf den normalen einphasigen Betrieb umgestellt werden.

## Startverfahren 2

Eine weitere Variante zum Starten des Motors 10 besteht darin, in Abhängigkeit von der Rotorstellung bzw. in Abhängigkeit von dem Signal des Rotorstellungssensors 67

- zuerst eine erste Bestromung der gesamten Wicklungsanordnung 30 durchzuführen und zu kontrollieren, ob der Motor gestartet hat. Falls nein,
- eine zweite Bestromung der ersten Teilgruppe TG1 der Wicklungsanordnung 30 durchzuführen und zu kontrollieren, ob der Motor 10 gestartet hat,
- eine dritte Bestromung der zweiten Teilgruppe TG2 der Wicklungsanordnung 30 durchzuführen und zu kontrollieren, ob der Motor 10 gestartet hat
- eine weitere Bestromung der weiteren Teilgruppen der Wicklungsanordnung 30 durchzuführen und zu kontrollieren, ob der Motor 10 gestartet hat.

Ein erfolgreicher Start kann z.B. an den auftretenden Wechseln des Signals des Rotorstellungssensors erkannt werden. Nach dem erfolgreichen Start kann auf den normalen einphasigen Betrieb umgestellt werden.

Sowohl die Richtung der ersten Bestromung der gesamten Wicklungsanordnung 30 als auch die Auswahl der ersten Teilgruppe TG1 im Falle von mehreren möglichen Teilgruppen erfolgt bevorzugt in Abhängigkeit vom Signal des Rotorstellungssensors 67 (vgl. Fig. 2).

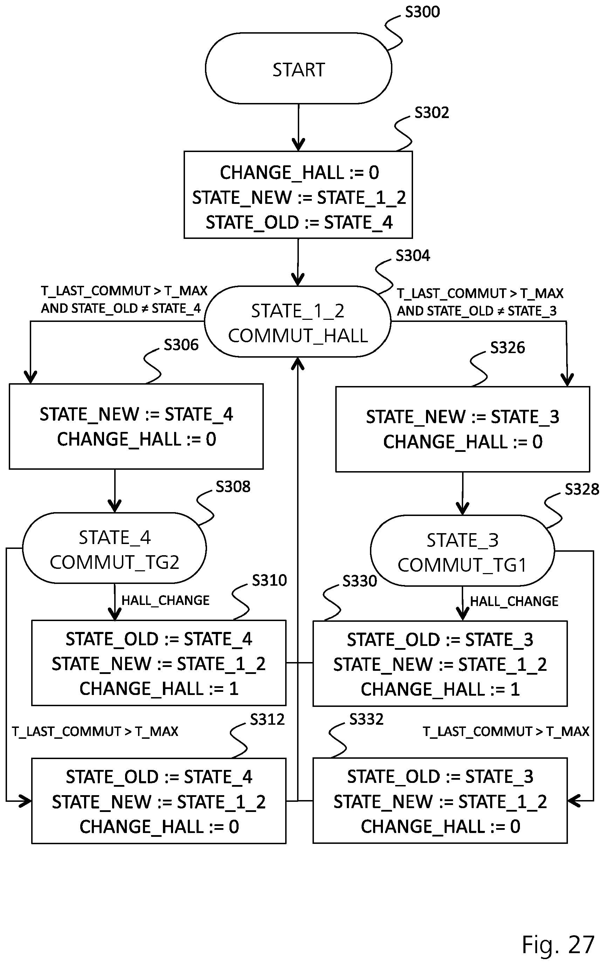

**Fig. 27** zeigt ein Flussdiagramm zur Durchführung des Startverfahrens 2.

Die Routine beginnt im Schritt S300, und in S302 wird die Variable CHANGE_HALL auf Null gesetzt, um anzuzeigen, dass kein Wechsel des Rotorstellungssignals stattgefunden hat. Die Zustandsvariable STATE_NEW wird auf den Wert STATE_1_2 gesetzt, um anzuzeigen, dass über die Haupt-Wicklungsanschlüsse 11, 12 (vgl. z. B. Fig. 1) eine Bestromung der gesamten Wicklungsanordnung 30 erfolgen soll. Eine Zustandsvariable STATE_OLD wird auf den Wert STATE_4 gesetzt, um anzuzeigen, dass als letztes eine Bestromung der Teilgruppe TG2 stattgefunden hat, wobei diese nicht wirklich stattgefunden haben muss (Initialisierung der Variablen). Anschließend erfolgt ein Sprung zu S304, und in diesem Unterprogramm wird eine Kommutierung (COMMUT_HALL) über die Wicklungsanschlüsse 11, 12 in Abhängigkeit vom Rotorstellungssignal durchgeführt, es wird also die gesamte Wicklungsanordnung bestromt.

Sofern sich der Rotor 40 dreht und regelmäßig ein Wechsel der Rotorstellungssignale erfolgt, bleibt der Motor im Unterprogramm S304.

Nach jeder Kommutierung des Motors wird die Zeitdauer T_LAST_COMMUT ab dieser Kommutierung gemessen, und wenn diese Zeitdauer eine maximale Zeitdauer T_MAX überschreitet, wird entweder die Teilgruppe TG1 oder die Teilgruppe TG2 bestromt. Hierzu wird die Variable STATE_OLD ausgewertet, und wenn diese dem Wert STATE_4 entspricht, wird zu S326 gesprungen. In S326 wird die Variable STATE_NEW auf den Wert STATE_3 gesetzt, und die Variable CHANGE_HALL auf den Wert Null. Anschließend wird nach S328 gesprungen, und in dieser Unterroutine erfolgt eine Bestromung der Teilgruppe TG1, wobei der Zustand als STATE_3 bezeichnet wird. Auch bei der Kommutierung in S328 wird die Zeitdauer T_LAST_COMMUT seit der letzten Kommutierung gemessen, und wenn eine maximale Zeitdauer T_MAX überschritten wird, erfolgt ein Sprung zu S332. In S332 wird die Variabel STATE_OLD auf den Wert STATE_OLD gesetzt, um anzuzeigen, dass der letzte Zustand der Zustand STATE_3 war. Die Variable STATE_NEW wird auf den Wert STATE_1_2 gesetzt, und die Variable CHANGE_HALL wird auf Null gesetzt, um anzuzeigen, dass kein Wechsel des Rotorstellungssignals stattgefunden hat. Anschließend erfolgt ein Sprung zurück nach S304.

Hat dagegen in S328 vor Ablauf der maximalen Zeitdauer T_MAX ein Wechsel des Rotorstellungssignals (HALL_CHANGE) stattgefunden, so wird nach S330 gesprungen, und dort wird die Variable STATE_OLD auf den Wert STATE_3, die Variable STATE_NEW auf den Wert STATE_1_2 und die Variable CHANGE_HALL auf den Wert 1 gesetzt, um anzuzeigen, dass ein Wechsel des Rotorstellungssignals stattgefunden hat. Anschließend erfolgt ein Sprung nach S304.

Hatte in S304 dagegen die Variable STATE_OLD den Wert STATE_3, so erfolgt bei Überschreitung der maximalen Zeitdauer T_MAX seit der letzten Kommutierung COMMUT_HALL ein Sprung nach S306. In S306 wird die Variable STATE_NEW auf den Wert STATE_4 gesetzt, und die Variable CHANGE_HALL auf den Wert Null. Anschließend erfolgt ein Sprung nach S308. In der Routine S308 hat der Motor den Zustand STATE_4, und es erfolgt eine Kommutierung COMMUT_TG2 der Teilgruppe TG2. Die Zeitdauer T_LAST_COMMUT seit der letzten Kommutierung COMMUT_TG2 wird gemessen, und bei Überschreitung einer maximalen Zeitdauer T_MAX erfolgt ein Sprung nach S312. In S312 wird die Variable STATE_OLD auf den Wert STATE_4, die Variable STATE_NEW auf den Wert STATE_1_2 und die Variable CHANGE_HALL auf den Wert Null gesetzt, und es erfolgt ein Sprung nach S304.

Hat dagegen vor erreichen der maximalen Zeitdauer T_MAX ein Wechsel des Rotorstellungssignals (HALL_CHANGE) stattgefunden, so erfolgt von S308 ein Sprung nach S310, und dort wird die Variable STATE_OLD auf den Wert STATE_4, die Variable STATE_NEW auf den Wert STATE_1_2 und die Variable CHANGE_HALL auf den Wert 1 gesetzt, und es erfolgt ein Sprung nach S304.

Beim Start des Motors oder aber während des Laufs wird nach jeder Kommutierung überprüft, ob innerhalb einer maximalen Zeitdauer T_MAX der nächste Wechsel des Rotorstellungssignals stattfindet, und wenn dies nicht der Fall ist, wird entweder ein Wechsel zum Zustand STATE_3 mit Kommutierung der Teilgruppe TG1 durchgeführt, oder aber ein Wechsel zum Zustand STATE_4, in dem eine Bestromung der Teilgruppe TG2 stattfindet, wobei ausgehend vom Zustand STATE_1_2 immer abwechselnd der Zustand STATE_3 oder der Zustand STATE_4 ausgewählt wird. Die Bestromung der Teilgruppe TG1 oder TG2 führt dazu, dass sich der Rotor in eine Position bewegt, aus der ein Start über den Zustand STATE_1_2 erfolgen kann.

Es sind viele Variationen möglich, und so kann z. B. alternativ vom Zustand STATE_1_2 zum Zustand STATE_3 und anschließend zum Zustand STATE_4 gesprungen werden, bis sich der Rotor dreht und ein Sprung zurück zum Zustand STATE_1_2 in S304 erfolgt.

Naturgemäß sind im Rahmen der vorliegenden Erfindung viele Abwandlungen und Modifikationen möglich.

So kann an Stelle einer Vollbrückenschaltung auch eine einfach Brückenschaltung verwendet werden, die nur eine Bestromung der Spule 31, 32 etc. in eine Richtung ermöglicht, und es kann auch eine bifilare Wicklung erfolgen, bei der jede der Spulen auf einem Statorpol einer Bestromungsrichtung zugeordnet ist, so dass insgesamt bei S Statorpolen 2 S Spulen vorhanden sind. Es kann auch nur ein Teil der Statorpole bewickelt sein.

Es kann zusätzlich ein Reluktanz-Hilfsmoment vorgesehen werden, um beispielsweise häufiger eine Startposition zu erreichen, aus der ein Start über eine Bestromung zwischen erstem Wicklungsanschluss 11 und zweitem Wicklungsanschluss 12 zu erreichen, wobei dieses Reluktanz-Hilfsmoment schwächer ausgebildet sein kann als bei einem Motor, der auf eine entsprechend Ausrichtung des Rotors für den Start durch das Reluktanz-Hilfsmoment zwingend angewiesen ist.

**Patentansprüche**

1. Elektromotor (10), welcher aufweist:

   einen Stator (20) mit einer Anzahl S von Statorpolen (21, 22, 23, 24, 25, 26),
   einen Rotor (40) mit einem Rotormagneten (40'), welcher Rotormagnet (40') eine Anzahl R von Rotorpolen (41, 42, 43, 44, 45, 46) aufweist, wobei R gleich S ist, und wobei der Rotor (40) oder der Stator (20) oder beide eine Asymmetrie aufweisen,
   eine einphasige Wicklungsanordnung (30) mit einem ersten Wicklungsanschluss (11) und einem zweiten Wicklungsanschluss (12), wobei über den ersten Wicklungsanschluss (11) und den zweiten Wicklungsanschluss (12) eine Anzahl W von Spulen der Wicklungsanordnung bestrombar ist,
   eine Endstufe (50), welche dazu ausgebildet ist, einen Strom zwischen dem ersten Wicklungsanschluss (11) und dem zweiten Wicklungsanschluss (12) zu ermöglichen,
   eine erste Vorrichtung (13, 13A, 13B, 13C, 69) umfassend Schalter (55, 56) vorgesehen ist, welche dazu ausgebildet ist, in Zusammenwirken mit der Endstufe eine Bestromung einer Teilgruppe (TG1, TG2) von mehr als Null der W Spulen und weniger als W der W Spulen zu ermöglichen, wobei ferner ein Mittel zur Bestimmung der Drehzahl vorgesehen ist, um die Drehzahl des Elektromotors (10) zu erfassen, und bei welchem von einem ersten Zustand (STATE_1_2) des Elektromotors (10) in einen zweiten Zustand (STATE_3, STATE_4) gewechselt wird, wenn die Drehzahl des Elektromotors (10) beim Start des Motors unter einer vorgegebenen Mindestdrehzahl liegt oder Null ist,
   wobei die Endstufe (50) in dem ersten Zustand (STATE_1_2) des Elektromotors (10) derart angesteuert wird, dass alle W Spulen über den ersten Wicklungsanschluss (11) und den zweiten Wicklungsanschluss (12) bestromt werden und die Endstufe (50) in dem zweiten Zustand (STATE_3, STATE_4) derart angesteuert wird, dass nur die eine Teilgruppe (TG1, TG2) der W Spulen bestromt wird, **dadurch gekennzeichnet, dass** welchem die Anzahl der Spulen (TG1) zwischen dem ersten Wicklungsanschluss (11) und einem dritten Wicklungsanschluss (13, 13A, 13B, 13C) ungleich der Anzahl der Spulen (TG2) zwischen dem dritten Wicklungsanschluss (13, 13A, 13B, 13C) und dem zweiten Wicklungsanschluss (12) ist.

2. Elektromotor (10) nach Anspruch 1,
   bei welchem die Asymmetrie dazu ausgebildet ist, bei jeder Rotorstellung des Rotors (40) über zumindest einen der folgenden Bestromungsvorgänge

   - Bestromung aller W Spulen, oder
   - Bestromung der mindestens einen Teilgruppe (TG1, TG2) der Spulen die Erzeugung eines Drehmoments zu ermöglichen.

3. Elektromotor (10) nach Anspruch 1 oder 2, bei welchem mindestens zwei Teilgruppen (TG1, TG2) vorgesehen sind.

4. Elektromotor nach einem der vorhergehenden Ansprüche, bei welchem die erste Vorrichtung (13; 13A, 13B, 13C, 55, 56) den dritten Wicklungsanschluss (13; 13A, 13B, 13C) und den Schalter (55, 56) aufweist, um einen Strom zwischen dem ersten Wicklungsanschluss (11) oder dem zweiten Wicklungsanschluss (12) einerseits und dem dritten Wicklungsanschluss (13; 13A, 13B, 13C) andererseits zu ermöglichen.

5. Elektromotor nach einem der vorhergehenden Ansprüche, bei welchem die Wicklungsanordnung (30) eine Mehrzahl von zueinander parallelen Teilsträngen (31, 32; 33, 34) aufweist, und bei welchem die erste Vorrichtung (69) einen Schalter (89) aufweist, der dazu ausgebildet ist, im nicht-leitenden Zustand einen Strom durch einen ersten Teil der Teilstränge zu verhindern, jedoch einen Strom durch die übrigen Teilstränge nicht zu verhindern.

6. Elektromotor nach einem der vorhergehenden Ansprüche, bei welchem der Rotor (40) eine Asymmetrie aufweist, welche dadurch erzeugt ist, dass die R Rotorpole (41, 42, 43, 44, 45, 46) zumindest teilweise eine von einander unterschiedliche Winkelerstreckung (phi_RM) aufweisen.

7. Elektromotor nach einem der vorhergehenden Ansprüche, bei welchem der Rotor (40) eine Asymmetrie aufweist, welche dadurch erzeugt ist, dass der Winkelabstand der magnetischen Mitte eines Rotorpols (41 bis 46) zur magnetischen Mitte eines benachbarten Rotorpols (41 bis 46) zumindest teilweise ungleich 360°/R ist.

8. Elektromotor nach einem der vorhergehenden Ansprüche, bei welchem W = S ist.

**9.** Elektromotor nach einem der vorhergehenden Ansprüche, bei welchem die Endstufe (50) eine Vollbrückenschaltung aufweist, um eine Bestromung der Wicklungsanordnung (30) zwischen dem ersten Wicklungsanschluss (11) und dem zweiten Wicklungsanschluss (12) in beide Richtung zu ermöglichen.

**10.** Elektromotor nach einem der vorhergehenden Ansprüche, bei welchem der Rotormagnet (40') permanentmagnetische Rotorpole (41, 42, 43, 44, 45, 46) oder elektromagnetisch erzeugte Rotorpole (41, 42, 43, 44, 45, 46) aufweist, wobei im Falle der elektromagnetisch erzeugten Rotorpole (41, 42, 43, 44, 45, 46) jedem Rotorpol (41, 42, 43, 44, 45, 46) eine im Betrieb bestromte Wicklung zugeordnet ist.

**11.** Verfahren zum Bestromen eines Elektromotors (10) gemäß einem der vorhergehenden Ansprüchen 1 bis 10 mit den folgenden Schritten:

A) Die Endstufe (50) wird in einem ersten Zustand (STATE_1_2) des Elektromotors (10) derart angesteuert, dass alle W Spulen über den ersten Wicklungsanschluss (11) und den zweiten Wicklungsanschluss (12) bestromt werden;
B) Die Endstufe (50) wird in einem zweiten Zustand (STATE_3, STATE_4) des Elektromotors (10) derart angesteuert, dass nur die mindestens eine Teilgruppe (TG1, TG2) der W Spulen bestromt wird,

wobei die Drehzahl des Elektromotors (10) erfasst wird, und bei welchem beim Start des Motors vom ersten Zustand (STATE_1_2) des Elektromotors (10) in den zweiten Zustand (STATE_3, STATE_4) gewechselt wird wenn die Drehzahl des Elektromotors (10) unter einer vorgegebenen Mindestdrehzahl liegt oder Null ist.

**12.** Verfahren nach Anspruch 11 , bei welchem beim Start des Motors in den zweiten Zustand (STATE_3, STATE_4) gewechselt wird, und anschließend in den ersten Zustand (STATE_3, STATE_4) gewechselt wird.

**13.** Verfahren nach einem der Ansprüche 11 oder 12, bei welchem im ersten Zustand (STATE_1_2) die Richtung der Bestromung zwischen dem ersten Wicklungsanschluss (11) und dem zweiten Wicklungsanschluss (12) in Abhängigkeit von der Rotorstellung des Rotors (40) vorgegeben wird.

**Claims**

**1.** An electric motor (10) that comprises:

a stator (20) having a number S of stator poles (21, 22, 23, 24, 25, 26),
a rotor (40) having a rotor magnet (40'), which rotor magnet (40') has a number R of rotor poles (41, 42, 43, 44, 45, 46), R being equal to S, and the rotor (40) or the stator (20) or both exhibiting an asymmetry,
a single-phase winding arrangement (30) having a first winding terminal (11) and a second winding terminal (12), current being capable of flowing through a number W of coils of the winding arrangement via the first winding terminal (11) and the second winding terminal (12),
an output stage (50) that is configured to enable a current between the first winding terminal (11) and the second winding terminal (12),
a first apparatus (13, 13A, 13B, 13C, 69) comprising switches (55, 56) is provided,
which is configured to enable, in cooperation with the output stage, a flow of current through a sub-group (TG1, TG2) of more than zero of the W coils and fewer than W of the W coils, a means for determining rotational speed further being provided for the purpose of sensing the rotational speed of the electric motor (10), and in which the electric motor (10) is switched from a first state (STATE_1_2) to a second state (STATE_3_STATE_4) whenever the rotational speed of the electric motor (10) upon starting of the motor is below a predefined minimum rotational speed or is at zero,
wherein when the electric motor (10) is in the first state (STATE_1_2), the output stage (50) is controlled in such a way that current flows through all W coils via the first winding terminal (11) and the second winding terminal (12), and when the electric motor is in the second state (STATE_3, STATE_4), the output stage (50) is controlled in such a way that current flows through only the one sub-group (TG1, TG2) of the W coils, **characterized in that** the number of coils (TG1) between the first winding terminal (11) and a third winding terminal (13, 13A, 13B, 13C) is not equal to the number of coils (TG2) between the third winding terminal (13, 13A, 13B, 13C) and the second winding terminal (12).

**2.** The electric motor (10) according to claim 1,

in which the asymmetry is configured to enable the generation of a torque, at any rotor position of the rotor (40), via at least one of the following current flow processes:

current flow through all W coils, or
- current flow through the at least one sub-group (TG1, TG2) of the coils.

3. The electric motor (10) according to claim 1 or 2, in which at least two subgroups (TG1, TG2) are provided.

4. The electric motor according to any of the preceding claims, in which the first apparatus (13; 13A, 13B, 13C, 55, 56) comprises the third winding terminal (13; 13A, 13B, 13C) and the switch (55, 56), in order to enable a current between the first winding terminal (11) or the second winding terminal (12) on the one hand, and the third winding terminal (13; 13A, 13B, 13C) on the other hand.

5. The electric motor according to any of the preceding claims, in which the winding arrangement (30) comprises a plurality of mutually parallel sub-strands (31, 32; 33, 34), and in which the first apparatus (69) comprises a switch (89), which is configured to prevent a current through a first portion of the sub-strands but not to prevent a current through the remaining sub-strands when said switch is in a nonconducting state.

6. The electric motor according to any of the preceding claims, in which the rotor (40) exhibits an asymmetry that is generated by the fact that the R rotor poles (41, 42, 43, 44, 45, 46) have angular extensions (phi_RM) that differ, at least in part, from one another.

7. The electric motor according to any of the preceding claims, in which the rotor (40) exhibits an asymmetry that is generated by the fact that the angular distance of the magnetic center of one rotor pole (41 to 46) from the magnetic center of an adjacent rotor pole (41 to 46) is, at least in part, not equal to 360°/R.

8. The electric motor according to any of the preceding claims, in which W = S.

9. The electric motor according to any of the preceding claims, in which the output stage (50) comprises a full bridge circuit, in order to enable a flow of current through the winding arrangement (30) between the first winding terminal (11) and the second winding terminal (12) in both directions.

10. The electric motor according to any of the preceding claims, in which the rotor magnet (40') comprises permanent-magnet rotor poles (41, 42, 43, 44, 45, 46) or electromagnetically generated rotor poles (41, 42, 43, 44, 45, 46), wherein in the case of the electromagnetically generated rotor poles (41, 42, 43, 44, 45, 46), a winding through which current flows during operation is assigned to each rotor pole (41, 42, 43, 44, 45, 46).

11. A method for current flow through an electric motor (10) according to any of the preceding claims 1 to 10, said method comprising the following steps:

A) with the electric motor (10) in a first state (STATE_1_2), the output stage (50) is controlled in such a way that current flows through all W coils via the first winding terminal (11) and the second winding terminal (12);
B) with the electric motor (10) in a second state (STATE_3, STATE_4), the output stage (50) is controlled in such a way that current flows through only the at least one sub-group (TG1, TG2) of the W coils,

wherein the rotational speed of the electric motor (10) is sensed, and in which, upon starting of the motor, the electric motor (10) is switched from the first state (STATE_1_2) to the second state (STATE_3, STATE_4) whenever the rotational speed of the electric motor (10) is below a predefined minimum rotational speed or is at zero.

12. The method according to claim 11, in which a switchover to the second state (STATE_3, STATE_4) is performed upon starting of the motor, and subsequently a switchover to the first state (STATE_3, STATE_4) is performed.

13. The method according to claim 11 or 12, in which, in the first state (STATE_1_2), the direction of the flow of current between the first winding terminal (11) and the second winding terminal (12) is defined in dependence upon the rotor position of the rotor (40).

**EP 2 965 418 B1**

**Revendications**

1. Moteur électrique (10), lequel présente :

   un stator (20) avec un nombre S de pôles de stator (21, 22, 23, 24, 25, 26),
   un rotor (40) avec un aimant de rotor (40'), lequel aimant de rotor (40') présente un nombre R de pôles de rotor (41, 42, 43, 44, 45, 46), dans lequel R est égal à S, et
   dans lequel le rotor (40) ou le stator (20) ou les deux présentent une asymétrie,
   un ensemble de bobinage monophasé (30) avec un premier raccord de bobinage (11) et un deuxième raccord de bobinage (12), dans lequel un nombre W de bobines de l'ensemble de bobinage peut être alimenté en courant par le biais du premier raccord de bobinage (11) et du deuxième raccord de bobinage (12),
   un étage final (50), lequel est réalisé pour permettre un courant entre le premier raccord de bobinage (11) et le deuxième raccord de bobinage (12),
   un premier dispositif (13, 13A, 13B, 13C, 69) comprenant des interrupteurs (55, 56) est prévu, lequel est réalisé pour permettre en coopération avec l'étage final une alimentation en courant d'un groupe partiel (TG1, TG2) de plus de zéro des W bobines et de moins de W des W bobines, dans lequel en outre un moyen de détermination de la vitesse de rotation est prévu pour détecter la vitesse de rotation du moteur électrique (10), et dans lequel il est passé d'un premier état (STATE_1_2) du moteur électrique (10) à un deuxième état (STATE_3, STATE_4), lorsque la vitesse de rotation du moteur électrique (10) lors du démarrage du moteur est inférieure à une vitesse de rotation minimum prédéfinie ou est nulle,
   dans lequel l'étage final (50) est commandé dans le premier état (STATE_1_2) du moteur électrique (10) de sorte que toutes les W bobines sont alimentées en courant par le biais du premier raccord de bobinage (11) et du deuxième raccord de bobinage (12) et l'étage final (50) est commandé dans le deuxième état (STATE_3, STATE_4) de sorte que seul l'un groupe partiel (TG1, TG2) des W bobines est alimenté en courant, **caractérisé en ce que** lequel le nombre de bobines (TG1) entre le premier raccord de bobinage (11) et un troisième raccord de bobinage (13, 13A, 13B, 13C) est différent du nombre de bobines (TG2) entre le troisième raccord de bobinage (13, 13A, 13B, 13C) et le deuxième raccord de bobinage (12).

2. Moteur électrique (10) selon la revendication 1, dans lequel l'asymétrie est réalisée pour permettre la génération d'un couple pour chaque position de rotor du rotor (40) par le biais d'au moins une des opérations d'alimentation en courant suivantes

   - alimentation en courant de toutes les W bobines, ou
   - alimentation de l'au moins un groupe partiel (TG1, TG2) des bobines.

3. Moteur électrique (10) selon la revendication 1 ou 2, dans lequel au moins deux groupes partiels (TG1, TG2) sont prévus.

4. Moteur électrique selon l'une quelconque des revendications précédentes, dans lequel le premier dispositif (13 ; 13A, 13B, 13C, 55, 56) présente le troisième raccord de bobinage (13 ; 13A, 13B, 13C) et l'interrupteur (55, 56) pour permettre un courant entre le premier raccord de bobinage (11) ou le deuxième raccord de bobinage (12) d'un côté et le troisième raccord de bobinage (13 ; 13A, 13B, 13C) d'un autre côté.

5. Moteur électrique selon l'une quelconque des revendications précédentes, dans lequel l'ensemble de bobinage (30) présente une pluralité de brins partiels parallèles l'un à l'autre (31, 32 ; 33, 34), et dans lequel le premier dispositif (69) présente un interrupteur (89), qui est réalisé pour empêcher à l'état non conducteur un courant par une première partie des brins partiels, mais ne pas empêcher un courant par les brins partiels restants.

6. Moteur électrique selon l'une quelconque des revendications précédentes, dans lequel le rotor (40) présente une asymétrie, laquelle est générée par le fait que les pôles de rotor R (41, 42, 43, 44, 45, 46) présentent au moins en partie une extension angulaire (phi_RM) différente l'une de l'autre.

7. Moteur électrique selon l'une quelconque des revendications précédentes, dans lequel le rotor (40) présente une asymétrie, laquelle est générée par le fait que la distance angulaire du centre magnétique d'un pôle de rotor (41 à 46) par rapport au centre magnétique d'un pôle de rotor adjacent (41 à 46) est au moins en partie différent de 360°/R.

8. Moteur électrique selon l'une quelconque des revendications précédentes, dans lequel W = S.

**9.** Moteur électrique selon l'une quelconque des revendications précédentes, dans lequel l'étage final (50) présente un circuit en pont complet pour permettre une alimentation en courant de l'ensemble de bobinage (30) entre le premier raccord de bobinage (11) et le deuxième raccord de bobinage (12) dans les deux directions.

**10.** Moteur électrique selon l'une quelconque des revendications précédentes, dans lequel l'aimant de rotor (40') présente des pôles de rotor à aimant permanent (41, 42, 43, 44, 45, 46) ou des pôles de rotor générés par voie électromagnétique (41, 42, 43, 44, 45, 46), dans lequel dans le cas des pôles de rotor générés par voie électromagnétique (41, 42, 43, 44, 45, 46), un bobinage alimenté en courant en fonctionnement est attribué à chaque pôle de rotor (41, 42, 43, 44, 45, 46).

**11.** Procédé d'alimentation en courant d'un moteur électrique (10) selon l'une quelconque des revendications précédentes 1 à 10 avec les étapes suivantes :

A) l'étage final (50) est commandé dans un premier état (STATE_1_2) du moteur électrique (10) de sorte que toutes les W bobines sont alimentées en courant par le biais du premier raccord de bobinage (11) et du deuxième raccord de bobinage (12) ;
B) l'étage final (50) est commandé dans un deuxième état (STATE_3, STATE_4) du moteur électrique (10) de sorte que seul l'au moins un groupe partiel (TG1, TG2) des W bobines est alimenté en courant,

dans lequel la vitesse de rotation du moteur électrique (10) est détectée, et dans lequel lors du démarrage du moteur, il est passé du premier état (STATE_1_2) du moteur électrique (10) au deuxième état (STATE_3, STATE_4) lorsque la vitesse de rotation du moteur électrique (10) est inférieure à une vitesse de rotation minimum prédéfinie ou est nulle.

**12.** Procédé selon la revendication 11, dans lequel lors du démarrage du moteur, il est passé au deuxième état (STATE_3, STATE_4), et ensuite il est passé au premier état (STATE_3, STATE_4).

**13.** Procédé selon l'une quelconque des revendications 11 ou 12, dans lequel dans le premier état (STATE_1_2), la direction de l'alimentation en courant entre le premier raccord de bobinage (11) et le deuxième raccord de bobinage (12) est prédéfinie en fonction de la position de rotor du rotor (40).

Fig. 1

Fig. 2

Fig. 3

EP 2 965 418 B1

Fig. 4

EP 2 965 418 B1

Fig. 5

Fig. 6

Fig. 7

Fig. 8

23

Fig. 9

Fig. 11

Fig. 10

Fig. 12

Fig. 13

Fig. 14

Fig. 15

Fig. 16

20

65°    55°

24    23

25    22

20

26    21

55°    65°

60°    60°

Fig. 17

phi_s    13

40    40'

N S

N S

Δ_ phi_s

20

10    11    12

Fig. 18

Fig. 19

Fig. 20

Fig. 21

Fig. 22

Fig. 23

Fig. 24

Fig. 25

Fig. 26

S300

START

S302

CHANGE_HALL := 0
STATE_NEW := STATE_1_2
STATE_OLD := STATE_4

S304

T_LAST_COMMUT > T_MAX
AND STATE_OLD ≠ STATE_4

STATE_1_2
COMMUT_HALL

T_LAST_COMMUT > T_MAX
AND STATE_OLD ≠ STATE_3

S306

STATE_NEW := STATE_4
CHANGE_HALL := 0

S326

STATE_NEW := STATE_3
CHANGE_HALL := 0

S308

STATE_4
COMMUT_TG2

S328

STATE_3
COMMUT_TG1

S310

HALL_CHANGE

STATE_OLD := STATE_4
STATE_NEW := STATE_1_2
CHANGE_HALL := 1

S330

HALL_CHANGE

STATE_OLD := STATE_3
STATE_NEW := STATE_1_2
CHANGE_HALL := 1

T_LAST_COMMUT > T_MAX

S312

STATE_OLD := STATE_4
STATE_NEW := STATE_1_2
CHANGE_HALL := 0

S332

T_LAST_COMMUT > T_MAX

STATE_OLD := STATE_3
STATE_NEW := STATE_1_2
CHANGE_HALL := 0

Fig. 27

Fig. 28

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 8702271 U1
- DE 3149766 A1

- EP 1094595 A2
- DE 102005035451 B3